(19) **Europäisches Patentamt / European Patent Office / Office européen des brevets**

(11) **EP 4 589 410 A1**

(12) **EUROPEAN PATENT APPLICATION**
published in accordance with Art. 153(4) EPC

(43) Date of publication:
23.07.2025 Bulletin 2025/30

(21) Application number: 23865143.4

(22) Date of filing: 08.08.2023

(51) International Patent Classification (IPC):
$G06F\ 3/01^{(2006.01)}$    $G06F\ 3/0346^{(2013.01)}$
$G06F\ 3/0484^{(2022.01)}$    $G06F\ 3/16^{(2006.01)}$
$H04N\ 21/24^{(2011.01)}$

(52) Cooperative Patent Classification (CPC):
G06F 3/01; G06F 3/0346; G06F 3/0484; G06F 3/16;
H04N 21/24

(86) International application number:
PCT/JP2023/028962

(87) International publication number:
WO 2024/057783 (21.03.2024 Gazette 2024/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.09.2022 JP 2022148454

(71) Applicant: Sony Group Corporation
Tokyo 108-0075 (JP)

(72) Inventors:
• NISHIMURA, Yu
  Tokyo 141-0022 (JP)
• TEJIMA, Asuka
  Tokyo 141-0022 (JP)
• UTSUKI, Shingo
  Tokyo 108-0075 (JP)
• OGAWA, Ryo
  Tokyo 108-0075 (JP)

(74) Representative: D Young & Co LLP
3 Noble Street
London EC2V 7BQ (GB)

(54) **INFORMATION PROCESSING DEVICE PROVIDED WITH 360-DEGREE IMAGE VIEWPOINT POSITION IDENTIFICATION UNIT**

(57) An information processing device includes: a 360-degree image processing unit that generates a 360-degree image on the basis of a plurality of captured images captured by a plurality of cameras worn by a first user; and a 360-degree image viewpoint position identification unit that identifies viewpoint position coordinates of the first user in the 360-degree image.

FIG. 19

DISPLAY AREA FOR GHOST-SIDE DEVICE

**Description**

TECHNICAL FIELD

The present technology relates to an information processing device, a display device, and an image sharing system.

BACKGROUND ART

Recently, there has been proposed an image sharing system that enables the sharing of a 360-degree image captured with a first-person viewpoint, covering the entire surroundings, with a wearable camera to allow others to virtually experience the same thing that the person has experienced. In such an image sharing system, the 360-degree image covering the surroundings of the user wearing the camera is transmitted in real time to a device such as a head-tracking head mounted display (HMD) or a screen used by others, so as to allow others to freely explore and observe the 360-degree image and communicate with the user wearing the camera.

Such an image sharing system has a feature to allow others to share a 360-degree image captured from the first-person viewpoint of the user wearing the camera, but there is an issue where others cannot know the direction the user wearing the camera is facing or what the user is looking at only by sharing the 360-degree image.

Therefore, there has been proposed a technology to superimpose an indicator or the like indicating the field of view of the user wearing the camera on the 360-degree image to convey the direction the user wearing the camera is looking.

CITATION LIST

PATENT DOCUMENT

Patent Document 1: Japanese Patent Application Laid-Open No. 2021-170341

SUMMARY OF THE INVENTION

PROBLEMS TO BE SOLVED BY THE INVENTION

There is, however, an unsolved issue where the indicator indicating the field of view disclosed in Patent Document 1 can convey the direction the user wearing the camera is looking, but cannot convey, to others, where the user is focusing attention. In particular, for an image capturing a scene that conveys the skills of the user wearing the camera, it is important to convey, to others, where the user wearing the camera is focusing attention.

The present technology has been made in view of such circumstances, and it is therefore an object of the present technology to provide an information processing device, a display device, and an image sharing system enabling sharing of a viewpoint position in a 360-degree image of a user wearing a camera with another user.

SOLUTIONS TO PROBLEMS

In order to solve the above-described problem, a first technology is an information processing device including: a 360-degree image processing unit that generates a 360-degree image on the basis of a plurality of captured images captured by a plurality of cameras worn by a first user; and a 360-degree image viewpoint position identification unit that identifies viewpoint position coordinates of the first user in the 360-degree image.

Furthermore, a second technology is a display device displaying a 360-degree image generated on the basis of a plurality of captured images captured by a plurality of cameras worn by a first user and viewpoint position coordinates of the first user identified in the 360-degree image to present the 360-degree image and the viewpoint position coordinates to a second user different from the first user.

Moreover, a third technology is an image sharing system including: an information processing device including a 360-degree image processing unit that generates a 360-degree image on the basis of a plurality of captured images captured by a plurality of cameras worn by a first user, and a 360-degree image viewpoint position identification unit that identifies viewpoint position coordinates of the first user in the 360-degree image; and a display device that displays the 360-degree image and the viewpoint position coordinates of the first user identified in the 360-degree image to present the 360-degree image and the viewpoint position coordinates to a second user different from the first user.

BRIEF DESCRIPTION OF DRAWINGS

Fig. 1 is a block diagram illustrating a configuration of an image sharing system 10.

Fig. 2 is a block diagram illustrating a configuration of a body-side device 100 according to a first embodiment.

Fig. 3 is a diagram illustrating how a viewpoint detection camera 101, a front-view camera 102, and a 360-degree camera 103 are mounted according to the first embodiment.

Fig. 4 is a block diagram illustrating a configuration of a ghost-side device 200.

Fig. 5 is a flowchart illustrating processing that is executed by an information processing device 150 according to the first embodiment.

Fig. 6A is a diagram illustrating viewpoint position coordinates in a left-eye image and right-eye image, Fig. 6B is a diagram illustrating viewpoint position coordinates in a front-view image, and Fig. 6C is a diagram illustrating viewpoint position coordinates in a 360-degree image.

Fig. 7 is a diagram for describing coordinate transformation of viewpoint position coordinates according to the first embodiment.

Fig. 8 is a diagram for describing calibration.

Fig. 9 is a block diagram illustrating a configuration of the body-side device 100 for calibration.

Fig. 10 is a diagram for describing calibration.

Fig. 11 is a diagram for describing a method for determining whether or not the number of viewpoint positions having a correspondence established through calibration is sufficient.

Fig. 12 is a block diagram illustrating a configuration of the body-side device 100 for sharing viewpoint position coordinates.

Fig. 13 is a block diagram illustrating a configuration of the ghost-side device 200 for sharing viewpoint position coordinates.

Fig. 14 is a flowchart illustrating processing to determine whether or not to synchronize a field of view.

Fig. 15 is a diagram for describing a first method for guiding the field of view for synchronization.

Fig. 16 is a diagram for describing a second method for guiding the field of view for synchronization.

Fig. 17 is a diagram for describing a third method for guiding the field of view for synchronization.

Fig. 18 is a flowchart illustrating processing to generate viewpoint position coordinates as body-side meta information on the basis of a viewpoint dwell time.

Fig. 19 is a diagram illustrating an example of how an icon indicating viewpoint position coordinates of the ghost-side device 200 is displayed.

Fig. 20 is a diagram for describing an example of how the icon indicating the viewpoint position coordinates is changed on the basis of the viewpoint dwell time.

Fig. 21 is a flowchart illustrating processing to generate viewpoint position coordinates as the body-side meta information on the basis of the viewpoint dwell time and utterance content.

Fig. 22 is a diagram illustrating an example of how the icon indicating the viewpoint position coordinates of the ghost-side device 200 and the utterance content are displayed.

Fig. 23 is a diagram illustrating an example of how viewpoint position coordinates of a plurality of ghost-side users are displayed.

Fig. 24 is a block diagram illustrating a configuration of a body-side device 100 according to a second embodiment.

Fig. 25 is a diagram illustrating how a viewpoint detection camera 101, a front-view camera 102, and a 360-degree camera 103 are mounted according to the second embodiment.

Fig. 26 is a flowchart illustrating processing that is executed by an information processing device 150 according to the second embodiment.

Fig. 27 is a diagram for describing coordinate transformation of viewpoint position coordinates according to the second embodiment.

Fig. 28 is a diagram illustrating another example of the 360-degree camera 103 according to the second embodiment.

Fig. 29 is a block diagram illustrating a configuration of a body-side device 100 according to a third embodiment.

Fig. 30 is a diagram illustrating how a viewpoint detection camera 101, a front-view camera 102, and a 360-degree camera 103 are mounted according to the third embodiment.

Fig. 31 is a diagram for describing coordinate transformation of viewpoint position coordinates according to the third embodiment.

Fig. 32 is a diagram illustrating another example of the 360-degree camera 103 according to the third embodiment.

Fig. 33 is a block diagram illustrating a modification of the image sharing system 10.

Fig. 34 is a diagram illustrating a modification in a case where there is no front-view camera 102.

Fig. 35 is a block diagram illustrating a configuration of a body-side device 100 in a case where there is no front-view camera 102.

## MODE FOR CARRYING OUT THE INVENTION

Hereinafter, embodiments of the present technology will be described with reference to the drawings. Note that the description will be given in the following order.

<1. First embodiment>
[1-1. Configuration of image sharing system 10]
[1-2. Assigning viewpoint position coordinates to 360-degree image]
[1-2-1. Configuration of body-side device 100 and ghost-side device 200]
[1-2-2. Transformation of viewpoint position coordinates]
[1-2-3. Calibration]
[1-3. Sharing of viewpoint position coordinates]
[1-3-1. Configuration of body-side device 100 and ghost-side device 200]
[1-3-2. Processing to enable sharing of viewpoint position coordinates: field-of-view synchronization]
[1-3-3. Processing to enable sharing of viewpoint position coordinates: display of viewpoint position coordinates]
<2. Second embodiment>
[2-1. Assigning viewpoint position coordinates to 360-degree image]
[2-1-1. Configuration of body-side device 100]
[2-1-2. Transformation of viewpoint position coordinates]
<3. Third embodiment>
[3-1. Assigning viewpoint position coordinates to 360-degree image]
[3-1-1. Configuration of body-side device 100]
[3-1-2. Transformation of viewpoint position coordinates]
<4. Modifications>

<1. First embodiment>

[1-1. Configuration of image sharing system 10]

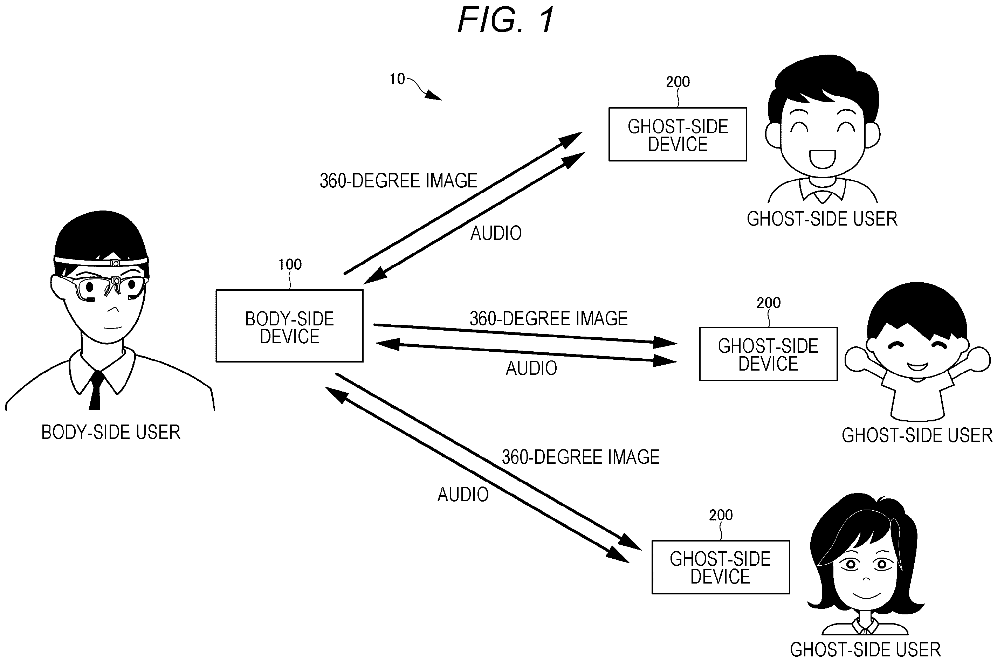

A configuration of an image sharing system 10 will be described with reference to Fig. 1. The image sharing system 10 includes a body that provides a 360-degree image captured by a camera and a ghost that receives the 360-degree image. A body-side device is referred to as body-side device 100, and a user who uses the body-side device 100 is referred to as body-side user. The body-side user corresponds to a first user in the claims. Furthermore, a ghost-side device is referred to as ghost-side device 200, and a user who uses the ghost-side device 200 is referred to as ghost-side user. The ghost-side user corresponds to a second user in the claims, and the ghost-side device corresponds to a display device in the claims.

The body-side device 100 and the ghost-side device 200 are connected over a network. The number of ghost-side devices 200 connected to the body-side device 100 may be one or more. There is no limitation on the number of ghost-side devices 200.

In the image sharing system 10, a 360-degree image generated by capturing an image of a real space with a camera included in the body-side device 100 is transmitted from the body-side device 100 to the ghost-side device 200. Then, the ghost-side device 200 receives and displays the 360-degree image, allowing the ghost-side user to view the 360-degree image. Furthermore, in the image sharing system 10, the body-side device 100 and the ghost-side device 200 transmit and receive audio, further allowing the body-side user and the ghost-side user to have a conversation. Note that the conversation is not an essential requirement in the present technology.

[1-2. Assigning viewpoint position coordinates to 360-degree image]

[1-2-1. Configuration of body-side device 100 and ghost-side device 200]

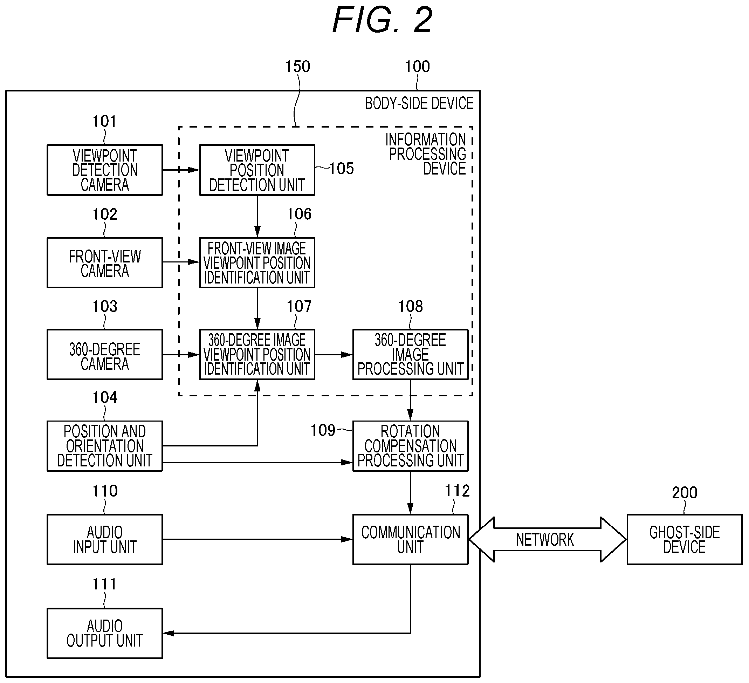

Next, configurations of the body-side device 100 and the ghost-side device 200 according to the first embodiment will be described with reference to Figs. 2 to 4.

The body-side device 100 includes a viewpoint detection camera 101, a front-view camera 102, a 360-degree camera 103, a position and orientation detection unit 104, a viewpoint position detection unit 105, a front-view image viewpoint position identification unit 106, a 360-degree image viewpoint position identification unit 107, a 360-degree image processing unit 108, a rotation compensation processing unit 109, an audio input unit 110, an audio output unit 111, and a communication unit 112.

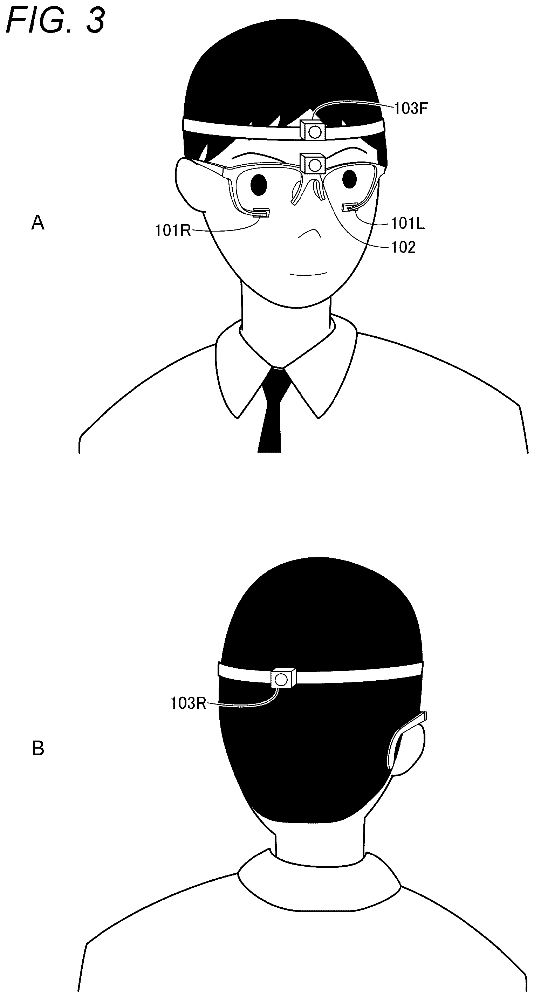

The viewpoint detection camera 101, the front-view camera 102, and the 360-degree camera 103 are each a wearable camera including a lens, an imaging element, an image signal processing circuit, and the like. The viewpoint detection camera 101, the front-view camera 102, and the 360-degree camera 103 are all worn by the body-side user. In the present embodiment, the viewpoint detection camera 101, the front-view camera 102, and the 360-degree camera 103 are mounted on an eyeglass-style frame and a band as illustrated in Fig. 3, and the body-side user wears the frame and the band.

The viewpoint detection camera 101 is a camera that captures an image of the eyes of the body-side user to detect viewpoint position coordinates of the body-side user. The viewpoint detection camera 101 includes a right viewpoint detection camera 101R that captures an image of the right eye of the body-side user and a left viewpoint detection camera 101L that captures an image of the left eye. In the following description, the right viewpoint detection camera 101R and the left viewpoint detection camera 101L are simply referred to as viewpoint detection camera 101 unless otherwise distinguished.

The front-view camera 102 is a camera that captures an image of a real space in front of the body-side user, and is fixedly mounted at approximately the center in the width direction of the face of the body-side user to face forward.

The 360-degree camera 103 is a camera that captures a wide-range image in all directions, that is, up, down, left, and right, around the body-side user. The 360-degree camera 103 can also be referred to as omnidirectional camera or spherical camera. The 360-degree camera 103 includes an ultra-wide-angle lens capable of capturing more than a 180-degree field of view, includes a front camera 103F that captures an image in front of the body-side user and a rear camera 103R that captures an image behind the body-side user, and acquires a front image and a rear image in one shot. The front image and the rear image are output to the 360-degree image viewpoint position identification unit 107. As illustrated in Fig. 3A, in the first embodiment, the front camera 103F is mounted at approximately the center in the width direction of the face. Furthermore, as illustrated in Fig. 3B, the rear camera 103R is mounted at approximately the center in the width direction of the back of the head.

Then, the 360-degree image processing unit 108 combines the front image and the rear image to form one 360-degree image. Note that the number of cameras constituting the 360-degree camera 103 is not limited to two, and may be any number. Furthermore, the arrangement of the cameras constituting the 360-degree camera 103 is not limited to a specific arrangement, and the number and arrangement of the cameras can be appropriately set according to the desired coverage area of an image to be captured. Note that, in order to suppress distortion of viewpoint detection information, the 360-degree camera 103 is desirably arranged at the same height as the eyes of the body-side user or as close to the height of the eyes as possible.

The front-view camera 102 and the 360-degree camera 103 configured as described above can capture the image of the real space from a position close to the viewpoint of the body-side user. Note that the viewpoint detection camera 101 and the front-view camera 102 need not necessarily be mounted together on the frame and may be configured as individual camera devices, and the body-side user may wear all the camera devices.

The position and orientation detection unit 104 includes various sensors that detect the positions and orientations of the front-view camera 102 and the 360-degree camera 103 mounted on the head of the body-side user. Examples of the sensors include an inertial measurement unit (IMU), an inertial sensor (accelerometer, angular velocity sensor, gyroscope for two-axis or three-axis direction), light detection and ranging, laser imaging detection and ranging (LiDAR), a time of flight (ToF) sensor, global navigation satellite system (GNSS), global positioning system (GPS), and the like. The position and orientation detection unit 104 outputs position and orientation information to the 360-degree image viewpoint position identification unit 107 and the rotation compensation processing unit 109. Note that the position and orientation information is not necessarily required for processing executed by the 360-degree image viewpoint position identification unit 107.

Note that the position and orientation detection unit 104 may extract a feature point or feature from the front-view image and the 360-degree image instead of or in conjunction with the above-described various sensors and detect the positions and orientations of the front-view camera 102 and the 360-degree camera 103 through angle estimation based on displacement of the feature point or the feature.

The viewpoint detection camera 101, the front-view camera 102, the 360-degree camera 103, and the position and orientation detection unit 104 are controlled in accordance with a predetermined synchronization signal, continuously execute imaging and sensing at a predetermined frequency as long as the body-side device 100 transmits the 360-degree image to the ghost-side device 200, and output the eye image, the front-view image, the front image, the rear image, and the position and orientation information.

The viewpoint position detection unit 105 detects right-eye viewpoint position coordinates of the body-side user in the right-eye image and left-eye viewpoint position coordinates of the body-side user in the left-eye image, both the images being captured by the viewpoint detection camera 101. The viewpoint position detection unit 105 outputs the viewpoint position detection result to the front-view image viewpoint position identification unit 106. For example, the viewpoint position detection unit 105 can detect the viewpoint position coordinates by detecting the pupil from the eye image.

Furthermore, the viewpoint position detection unit 105 may be capable of estimating the viewpoint dwell time from the viewpoint position, the pupil movement, or the like.

The front-view image viewpoint position identification unit 106 identifies viewpoint position coordinates in the front-view image on the basis of the viewpoint position coordinates in the eye image detected by the viewpoint position detection unit 105 and the front-view image. The front-view image viewpoint position identification unit 106 outputs the viewpoint position identification result to the 360-degree image viewpoint position identification unit 107. In the following description, the viewpoint position identification result from the front-view image viewpoint position identification unit 106 may be referred to as first viewpoint position identification result.

The 360-degree image viewpoint position identification unit 107 identifies the viewpoint position coordinates of the body-side user in the front image on the basis of the front image that is a part of the 360-degree image, the position and orientation information, and the first viewpoint position identification result. The 360-degree image viewpoint position identification unit 107 outputs the front image, the rear image, and a second viewpoint position identification result to the 360-degree image processing unit 108. In the following description, the viewpoint position identification result from the 360-degree image viewpoint position identification unit 107 may be referred to as second viewpoint position identification result.

The 360-degree image processing unit 108 combines the front image captured by the front camera 103F and the rear image captured by the rear camera 103R, the front camera 103F and the rear camera 103R constituting the 360-degree camera 103, and further executes predetermined image processing such as stitching and color adjustment to generate the 360-degree image. The 360-degree image processing unit 108 outputs the 360-degree image to the rotation compensation processing unit 109.

The rotation compensation processing unit 109 compensates for head rotation or shaking of the body-side user in the 360-degree image. As a result, the 360-degree image can be fixed in a space, regardless of head rotation or shaking of the body-side user, and the user viewing the 360-degree image can check the movement of the viewpoint and other operations without losing the overall image of the space.

The audio input unit 110 includes a microphone, an audio processing circuit, and the like for collecting audio emitted by the body-side user.

The audio output unit 111 includes a speaker, an audio processing circuit, and the like for outputting audio of the ghost-side user transmitted from the ghost-side device 200. Note that the audio input unit 110 and the audio output unit 111 are not essential components.

The communication unit 112 is a communication module that transmits and receives image data, audio data, and the like to and from the ghost-side device 200 over the network. Specific examples of the communication method may include, regardless of whether wired or wireless, cellular communication, Wi-Fi, Bluetooth (registered trademark), near field communication (NFC), Ethernet (registered trademark), high-definition multimedia interface (HDMI (registered trademark)), universal serial bus (USB), and the like.

The information processing device 150 includes the viewpoint position detection unit 105, the front-view image viewpoint position identification unit 106, the 360-degree image viewpoint position identification unit 107, and the 360-degree image processing unit 108. The information processing device 150 according to the present embodiment operates on a device such as a personal computer, a tablet terminal, or a smartphone, but such devices may have a function as the information processing device 150 in advance, or a device having a function as a computer may execute a program to implement the information processing device 150 and the information processing method. Furthermore, a control unit may execute the program to function as the information processing device 150. The program may be preinstalled in the body-side device 100 or may be distributed via download, a storage medium, or the like and installed by the user or the like. Furthermore, the information processing device 150 may be configured as a single device.

Furthermore, although not illustrated, the body-side device 100 may include a control unit, a storage unit, and an input unit.

The control unit includes a central processing unit (CPU), a random access memory (RAM), a read only memory (ROM) and the like. The CPU executes various types of processing in accordance with a program stored in the ROM and issues commands to control the entire body-side device 100 and each unit thereof.

The storage unit is, for example, a mass storage medium such as a hard disk or a flash memory. The storage unit stores data, a database, an application, and the like used by the body-side device 100.

The input unit is used by the body-side user to input an operation instruction or the like to the body-side device 100. When the user provides the input to the input unit, a control signal corresponding to the input is generated, and each unit executes various processing in accordance with the control signal.

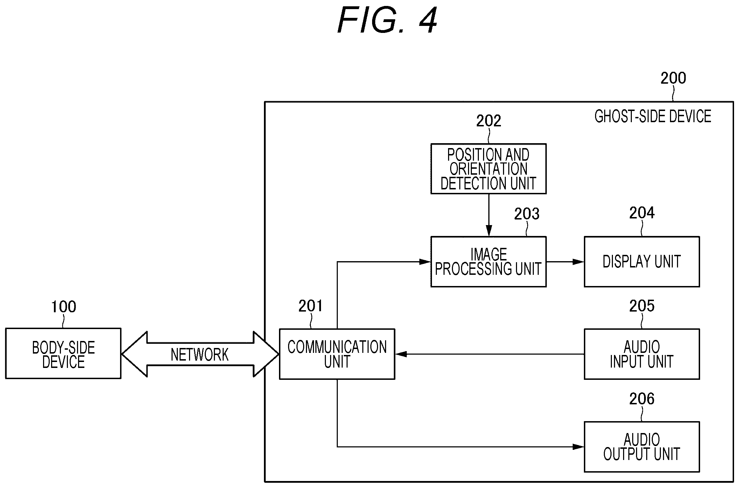

As illustrated in Fig. 4, the ghost-side device 200 includes a communication unit 201, a position and orientation detection unit 202, an image processing unit 203, a display unit 204, an audio input unit 205, and an audio output unit 206.

The communication unit 201, the audio input unit 205, and the audio output unit 206 are similar to those included in the body-side device 100.

The position and orientation detection unit 202 includes various sensors that detect the position and orientation of the ghost-side device 200. Examples of the sensors include an IMU, an inertial sensor (accelerometer, angular velocity sensor, gyroscope for two-axis or three-axis direction), LiDAR, a ToF sensor, GNSS, GPS, and the like. The position and orientation detection unit 202 outputs the position and orientation information to the image processing unit 203.

The image processing unit 203 identifies and cuts out a display area to be displayed on the display unit 204 from the 360-degree image transmitted from the body-side device 100 on the basis of the position and orientation information, and outputs the display area to the display unit 204. The display area in the 360-degree image displayed on the display unit 204 becomes the field of view of the ghost-side user. The display area changes in a manner that depends on the position and orientation of the body-side device 100, so that the display area transitions to the right in the 360-degree image when the ghost-side user turns to the right, and the display area transitions to the left in the 360-degree image when the ghost-side user turns to the left. It is therefore possible for the ghost-side user to freely change the viewpoint in the 360-degree image.

The display unit 204 is a display device such as a liquid crystal display or an organic electro luminescence (EL) display that displays the display area in the 360-degree image output from the image processing unit 203, a user interface (UI) for the user to use the ghost-side device 200, and the like.

The ghost-side device 200 is configured as described above. Examples of the ghost-side device 200 include a head mounted display, a smartphone, a tablet terminal, a smartwatch, a personal computer, a wearable device, a television, a projector, a portable game console, a portable music player, and the like. A control program that executes the processing according to the present technology may be preinstalled in the ghost-side device 200, or may be distributed via download, a storage medium, or the like and installed by the user himself/herself.

[1-2-2. Transformation of viewpoint position coordinates]

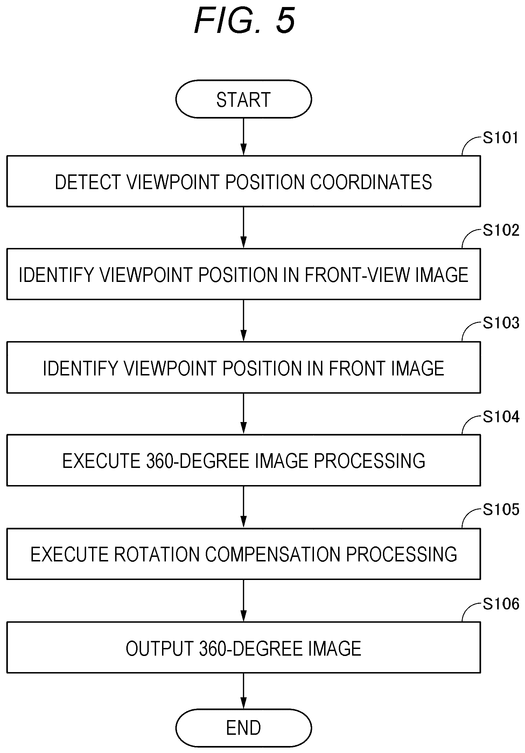

Next, processing that is executed by the information processing device 150 will be described with reference to Fig. 5. With the sharing of the 360-degree image enabled by the image sharing system 10, the information processing device 150 is required to generate the 360-degree image, transform viewpoint position coordinates indicating the position where the body-side user is looking into coordinates in the 360-degree image, and identify which part of the 360-degree image the body-side user is looking at.

Note that, as a precondition for the processing in Fig. 5, it is assumed that the right-eye image and the left-eye image have been captured by the viewpoint detection camera 101, the front-view image has been captured by the front-view camera 102, and the front image and the rear image have been captured by the front camera 103F and the rear camera 103R constituting the 360-degree camera 103.

Furthermore, it is assumed that the position and orientation information has been detected by the position and orientation detection unit 104. The position and orientation estimation result is represented as $(\Delta\theta, \Delta\varphi, \Delta\psi)$ using the rotation angle of head movement of the body-side user.

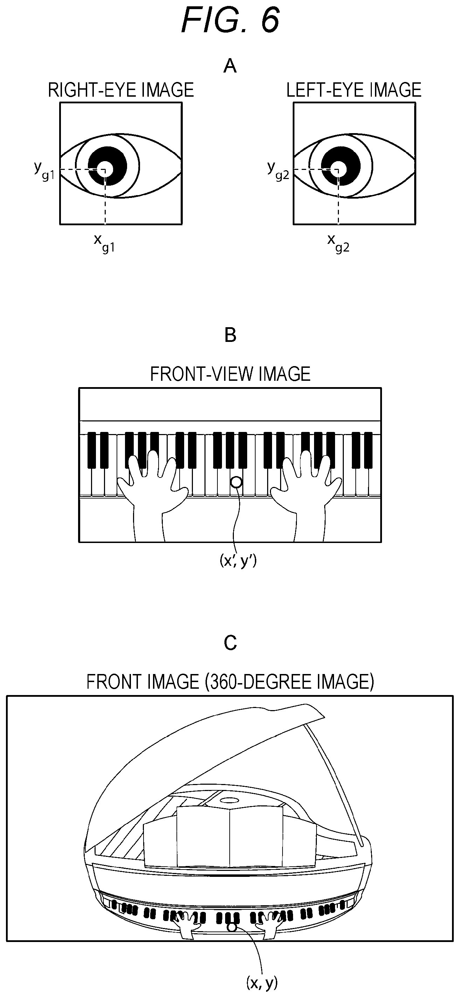

First, in step S101, the viewpoint position detection unit 105 detects viewpoint position coordinates from the right-eye image and the left-eye image captured by the viewpoint detection camera 101. The viewpoint position coordinates are represented in xy coordinates, and are detected as $(xg1, yg1)$ for the left-eye image and $(xg2, yg2)$ for the right-eye image as illustrated in Fig. 6A.

Next, in step S102, the front-view image viewpoint position identification unit 106 identifies, on the basis of the front-view image captured by the front-view camera 102 and the viewpoint position coordinates in the right-eye image and the left-eye image, viewpoint position coordinates in the front-view image. The viewpoint position coordinates in the front-view image become $(x', y')$ as illustrated in Fig. 6B, and are represented by the following Equation 1.

[Math. 1]

$$(x', y') = f'(xg1, yg1, xg2, yg2)$$

f' represents a coordinate transformation function determined through general eye-tracking calibration. In order to obtain f', positional relationship information regarding a positional relationship among the left viewpoint detection camera 101L, the right viewpoint detection camera 101R, and the front-view camera 102 is required, so that the positional relationship information is prestored in the information processing device 150.

Next, in step S103, the 360-degree image viewpoint position identification unit 107 identifies viewpoint position coordinates in the front image that is a part of the 360-degree image on the basis of the viewpoint position coordinates in the front-view image and the position and orientation information. In the present embodiment, the viewpoint position coordinates in the front image become $(x, y)$ as illustrated in Fig. 6C, and are represented by the following Equation 2.

[Math. 2]

$$(x, y) = f(x', y', \Delta\theta, \Delta\varphi, \Delta\psi)$$

f represents a coordinate transformation function determined through general eye-tracking calibration. In order to obtain f, positional relationship information regarding a positional relationship between the 360-degree camera 103 and the front-view camera 102 is required, so that the positional relationship information is prestored in the information processing device 150.

Next, in step S104, the 360-degree image processing unit 108 combines the front image and the rear image, and further executes predetermined image processing to generate the 360-degree image. As a result of generating the 360-degree image using the front image to which the viewpoint position coordinates are assigned as described above, the viewpoint position coordinates are assigned to the 360-degree image.

Next, in step S105, the rotation compensation processing unit 109 executes rotation compensation processing on the 360-degree image to compensate for head rotation or shaking of the body-side user.

Then, in step S106, the information processing device 150 outputs the 360-degree image to which the viewpoint position coordinates are assigned. The output 360-degree image is transmitted to the ghost-side device 200 via the communication unit 112 and the network.

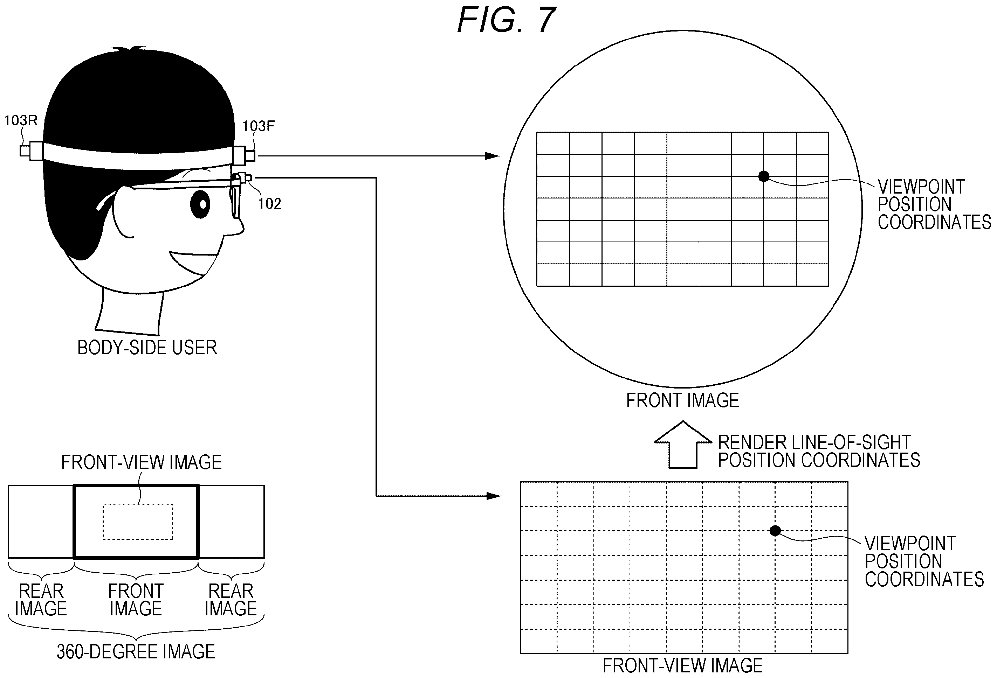

Next, coordinate transformation for assigning the viewpoint position coordinates in the front-view image to the 360-degree image that is executed by the 360-degree image viewpoint position identification unit 107 will be described with reference to Fig. 7.

As described above, in the body-side device 100, the front camera 103F that is a part of the 360-degree camera 103 is securely mounted at the front center of the head of the body-side user, and the rear camera 103R is securely mounted at the rear center of the head of the body-side user. Furthermore, the front-view camera 102 is securely mounted at the front center of the head of the body-side user.

Therefore, a relationship among the front image and the rear image constituting the 360-degree image, and the front-view image is as illustrated in Fig. 7. The front image is placed at the center, and the rear image is placed at both left and right ends of the front image, thereby forming the 360-degree image. An imaging area of the front-view camera 102 is set at the center of the 360-degree image, that is, at the center of the front image.

First, in the coordinate transformation for assigning the viewpoint position coordinates to the 360-degree image, a grid having a predetermined size is set on the front-view image as illustrated in Fig. 7. Furthermore, a grid having the predetermined size and the same number of intersections as the grid set on the front-view image is also set on the front image. Then, calibration is executed in advance to generate a correspondence between the grid intersections on the front image and the grid intersections on the front-view image as a look-up-table (LUT). The LUT is generated in advance for all the intersections of the grids set on the front-view image and the front image. Details of the calibration will be described below.

In general, the front camera 103F is wider in field of view range than the front-view camera 102, and in the present embodiment, the front camera 103F and the front-view camera 102 have a fixed positional relationship and are both facing forward. It is therefore possible to identify, by executing the coordinate transformation on the basis of the LUT generated in advance, the locations where the intersections of the grid on the front-view image correspond to on the front image, and render the viewpoint position coordinates identified in the front-view camera 102 onto the front image. Accordingly, the viewpoint position coordinates can be assigned to the 360-degree image. In the first embodiment, this coordinate transformation is executed before the 360-degree image is generated by combining the front image and the rear image.

Note that increasing the grid granularity allows an increase in the accuracy of coordinate transformation but leads to an increase in the processing load of the coordinate transformation processing. On the other hand, decreasing the grid granularity leads to a decrease in the accuracy of coordinate transformation but allows a decrease in the processing load of the coordinate transformation processing. Therefore, the user or the operator of the image sharing system 10 may set the grid granularity according to the accuracy of coordinate transformation, the computing power of the body-side device 100, and the like.

For the transmission of the 360-degree image to the ghost-side device 200, it is desirable that the frame rate be at least 30 frame per second (fps), so that it is assumed that the number of data entries of the LUT is increased in advance through linear or nonlinear interpolation in order to reduce the computational load during the viewpoint coordinate transformation.

Note that, a method for identifying the viewpoint position in the front image on the basis of features in the vicinity of the viewpoint position in the front-view image other than the coordinate transformation based on the LUT can also be employed.

[1-2-3. Calibration]

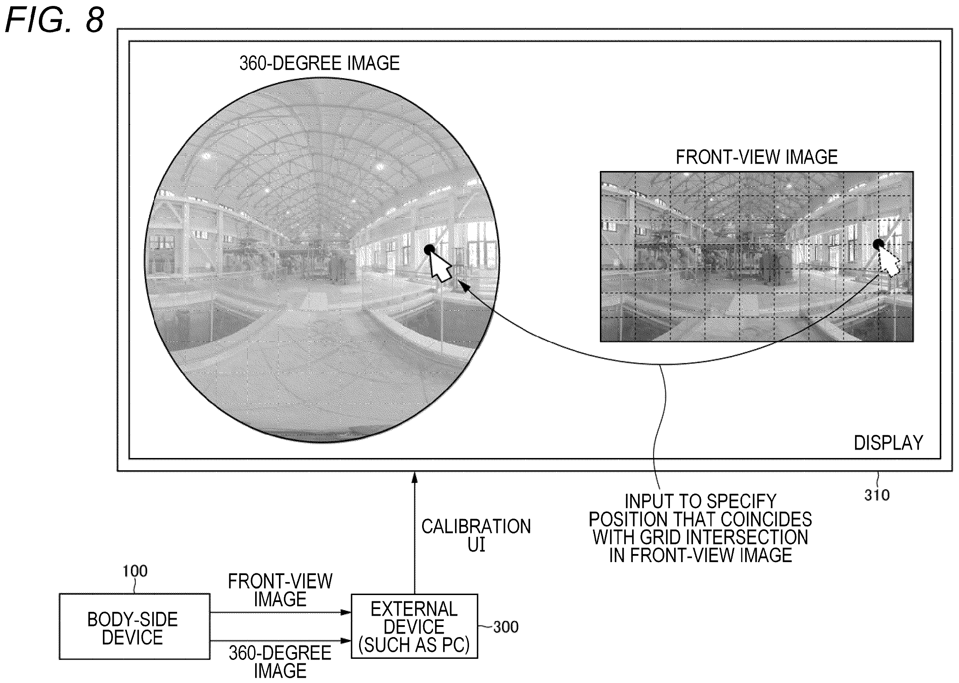

Next, calibration for creating the LUT used in the coordinate transformation for assigning the viewpoint position coordinates to the 360-degree image will be described with reference to Figs. 8 to 11.

The calibration may be executed before the start of communication between the body-side device 100 and the ghost-side device 200, or may be executed during communication between the body-side device 100 and the ghost-side device 200. The calibration that is executed before the start of communication is required in a case where the mounting position of the camera of the body-side device 100 changes day by day, for example. Furthermore, the calibration that is executed during communication is required in a case where the body-side user changes the mounting position of the camera or dismounts and remounts the camera during communication between the body-side device 100 and the ghost-side device 200, for example. Note that, in a case where the position and orientation information of both of the front-view camera 102 and the 360-degree camera 103 can be acquired, a correspondence between the front-view image and the front image (360-degree image) can be corrected using the position and orientation information, which eliminates the need of the calibration.

First, the calibration that is executed before the start of communication between the body-side device 100 and the ghost-side device 200 will be described with reference to Fig. 8. This calibration is executed by the body-side user (or a worker related to the body-side user).

The body-side device 100 is connected to an external device 300 such as a PC, and the front-view image and the 360 image are output to the external device 300. Then, the external device 300 displays, on a display 310, a calibration UI where the front-view image and the 360 image are displayed on one screen. The front-view image and the 360-degree image are preferably displayed side by side on the display 310 as illustrated in Fig. 8. On the calibration UI, a grid having predetermined granularity is superimposed on the front-view image. A program for generating the calibration UI needs to be preinstalled in the external device 300. Note that the external device 300 and the display 310 may be integrated into a single device, or may be separate devices connected in a wired or wireless manner.

Then, the body-side user views the calibration UI displayed on the display 310 to visually check the position of each intersection of the grid on the front-view image, and provides, to the 360-degree image, input to specify the same position as the intersection of the grid on the front-view image. It is possible to establish, by repeating the above on the plurality of intersections of the grid on the front-view image, a correspondence between the coordinates of the front-view image and the coordinates of the front image to create the LUT. Note that, in order to improve the accuracy of the LUT, it is desirable to establish a correspondence for more (or all) grid intersections.

Note that, in a case where the calibration is executed during communication between the body-side device 100 and the ghost-side device 200, a calibration UI similar to the calibration UI in Fig. 8 may be displayed on a wearable device such as an eyeglass-type display or an HMD worn by the body-side user so as to allow the body-side user to execute the calibration.

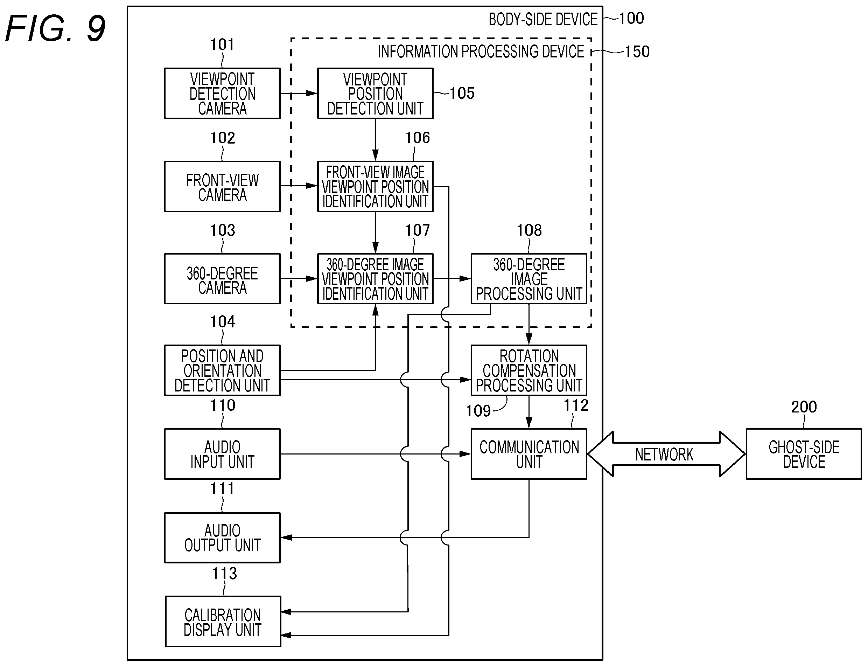

Note that, although the configuration where the body-side device 100 is connected to the external device 300 has been described above, the body-side device 100 itself may include a calibration display unit 113 for generating and displaying the calibration UI as illustrated in Fig. 9.

Next, a first example of the calibration that is executed during communication between the body-side device 100 and the ghost-side device 200 will be described. This calibration is executed by the ghost-side user (or a worker related to the ghost-side user).

The body-side device 100 is connected to the external device 300 such as a PC, and the front-view image and the 360 image are output to the external device 300, in a manner similar to Fig. 8. Then, the external device 300 displays, on the display 310, the calibration UI where the front-view image and the 360 image are displayed on one screen. On the calibration UI, a grid having predetermined granularity is superimposed on the front-view image.

Then, the ghost-side user views the calibration UI displayed on the display 310 to visually check the position of each intersection of the grid on the front-view image, and provides, to the 360-degree image, input to specify the same position as the intersection of the grid on the front-view image. It is possible to establish, by repeating the above on the plurality of intersections of the grid on the front-view image, a correspondence between the coordinates of the front-view image and the coordinates of the front image to create the LUT. Note that, in order to improve the accuracy of the LUT, it is desirable to establish a correspondence for more (or all) grid intersections. This method is useful in a case where the body-side user cannot view the calibration UI.

Note that, in the method for superimposing the grid on the front-view image, when the grid size is refined and the correspondence between the front image and the front-view image is established at more grid intersections, the accuracy of the LUT increases, but the calibration work becomes complicated. On the other hand, when the grid size is enlarged and the correspondence between the front image and the front-view image is established at fewer grid intersections, the accuracy of the LUT decreases, but the calibration work becomes simple.

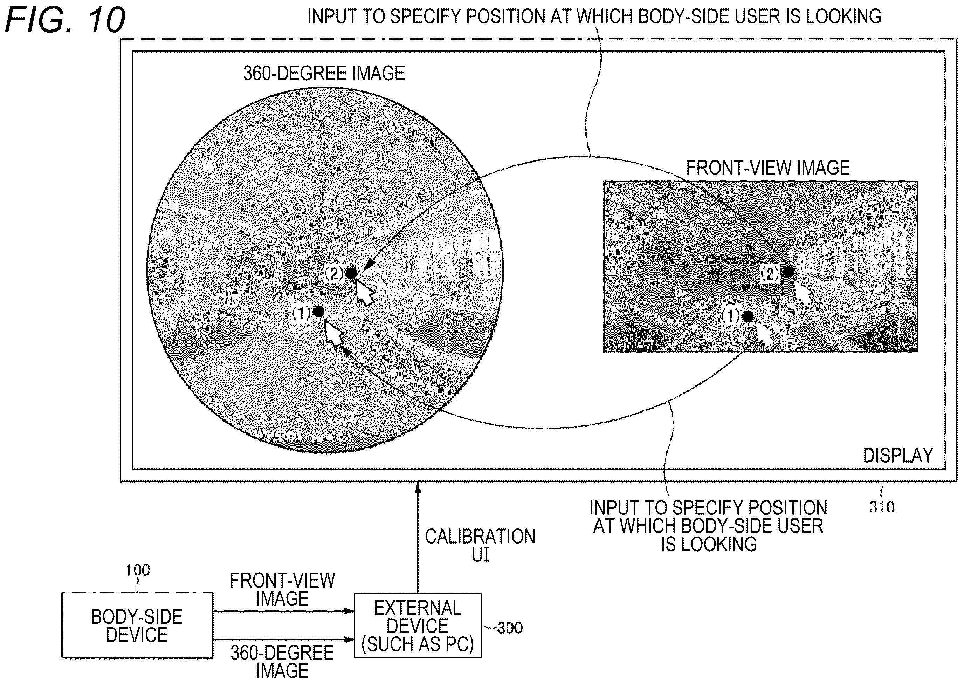

Next, a second example of the calibration that is executed during communication between the body-side device 100 and the ghost-side device 200 will be described with reference to Fig. 10. In the second example, while the body-side user and the ghost-side user interact with each other, the ghost-side user executes the calibration.

The body-side device 100 is connected to the external device 300 such as a PC, and the front-view image and the 360 image are output to the external device, as illustrated in Fig. 10. Then, the external device 300 displays, on the display 310, the calibration UI where the front-view image and the 360 image are displayed on one screen. It is not necessary for this calibration UI to superimpose the grid on the front-view image. The calibration UI is viewed by the ghost-side user.

Then, the ghost-side user instructs the body-side user to look at a specific position by voice or the like, and when the body-side user looks at the specific position, an icon indicating the viewpoint position is superimposed on the front-view image on the calibration UI. It is possible to display the icon indicating the viewpoint position by outputting the first viewpoint position identification result from the front-view image viewpoint position identification unit 106 to the external device 300 and rendering the icon onto the calibration UI on the basis of the first viewpoint position identification result.

The ghost-side user visually checks, in the 360-degree image, the same position as the icon indicating the viewpoint position superimposed on the front-view image, and provides input to specify the position in the 360-degree image.

In the example in Fig. 10, the ghost-side user finds a position where the body-side user is looking from the 360-degree image, the position being indicated by an icon (1) on the front-view image, and provides input to specify the position. Similarly, the ghost-side user finds a position where the body-side user is looking from the 360-degree image, the position being indicated by an icon (2) on the front-view image, and provides input to specify the position. It is possible to establish, by repeating the above on different positions, a correspondence between the coordinates of the front-view image and the coordinates of the front image to create the LUT. The positions of the icons (1) and (2) in Fig. 10 are merely examples.

Note that it is also possible to generate the LUT by a method in which the body-side user fixes the viewpoint position even without an instruction from the ghost-side user and sends a signal indicating that the viewpoint position has been fixed to the ghost-side user, and the ghost-side user confirms the viewpoint position and establishes the correspondence. As described above, it is also possible for the ghost-side user to execute the calibration in response to the signal from the body-side user. Furthermore, in a case where there is bias in multiple viewpoint positions of the body-side user, the ghost-side user can instruct the body-side user to, for example, "align the viewpoint in this direction" to eliminate the bias in the viewpoint positions, thereby allowing an improvement in the accuracy of the LUT.

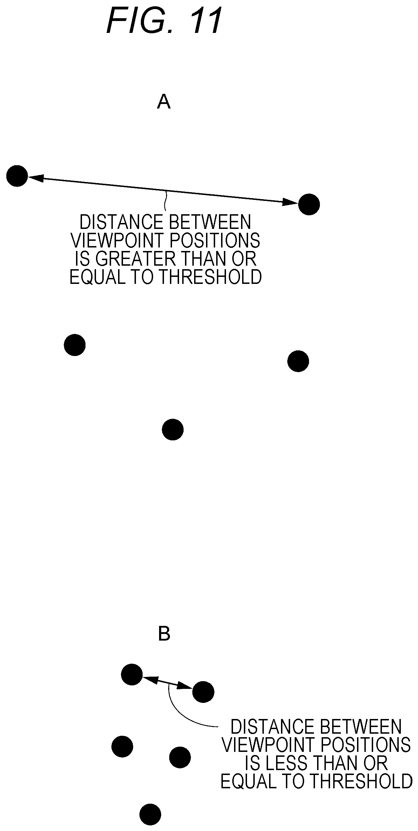

Whether or not the number of viewpoint positions having a correspondence established for calibration is sufficient can be determined by, for example, comparing a predetermined threshold with a distance between a viewpoint position having an established correspondence and another viewpoint position having an established correspondence and located in the vicinity of the viewpoint position as illustrated in Fig. 11. As illustrated in Fig. 11A, in a case where the distance between the viewpoint positions is greater than or equal to the threshold, it is determined that the number of viewpoint positions having an established correspondence is insufficient. On the other hand, as illustrated in Fig. 11B, in a case where the distance between the viewpoint positions is less than or equal to the threshold, it is determined that the number of viewpoint positions having an established correspondence is sufficient. Note that the threshold is preset on the basis of the number of viewpoint positions for which a correspondence is to be established, the accuracy of the LUT, and the like.

[1-3. Sharing of viewpoint position coordinates]

[1-3-1. Configuration of body-side device 100 and ghost-side device 200]

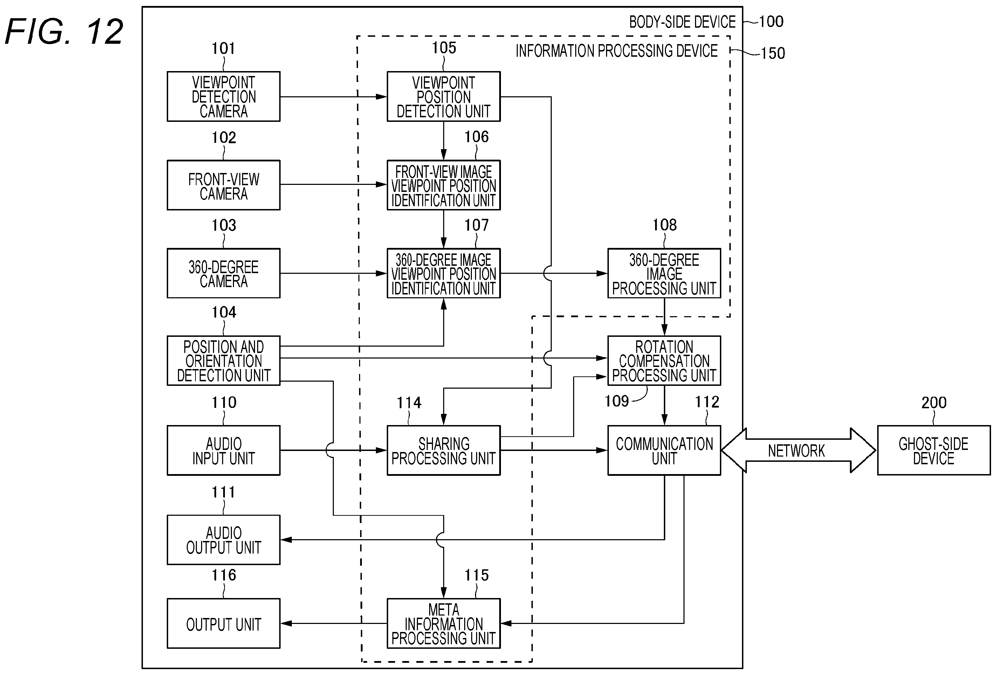

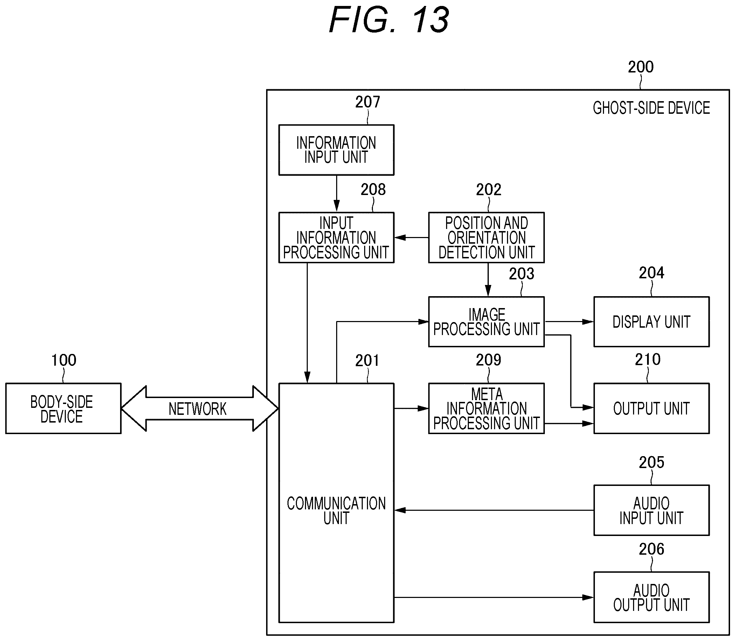

Next, the sharing of viewpoint position coordinates when the 360-degree image is shared between the body-side device 100 and the ghost-side device 200 will be described. First, configurations of the body-side device 100 and the ghost-side device 200 for sharing viewpoint position coordinates will be described with reference to Figs. 12 and 13. Note that the description of the configurations described above with reference to Figs. 2 and 4 will be omitted.

As illustrated in Fig. 12, the body-side device 100 includes a sharing processing unit 114, a meta information processing unit 115, and an output unit 116.

The sharing processing unit 114 determines whether or not to execute processing to enable the sharing of viewpoint position coordinates between the body-side device 100 and the ghost-side device 200 and generates body-side meta information according to the determination result. Then, the body-side meta information is transmitted to the ghost-side device 200 via the communication unit 112. The processing to enable the sharing of viewpoint position coordinates includes "field-of-view synchronization" and "display of viewpoint position coordinates". Details of such processing will be described later.

The body-side meta information includes viewpoint position coordinates, information indicating the range of the front-view image in the 360-degree image, indicating the field of view of the body-side user, angle information indicating the position of the front-view image in the 360-degree image, information regarding field-of-view synchronization and asynchronization, the viewpoint dwell time, and the like.

The meta information processing unit 115 generates output for the output unit 116 on the basis of ghost-side meta information transmitted from the ghost-side device 200.

The output unit 116 includes a display that displays information for guiding the field of view of the body-side user in a specific direction to synchronize the field of view, an actuator for guiding the field of view of the body-side user in a specific direction to synchronize the field of view, and the like.

As illustrated in Fig. 13, the ghost-side device 200 includes an information input unit 207, an input information processing unit 208, a meta information processing unit 209, and an output unit 210.

The information input unit 207 is used by the ghost-side user to input information. Examples of the information input unit 207 include a touch panel, a mouse, a VR controller, a viewpoint tracking device, and the like, but any device may be used as long as information can be input.

The input information processing unit 208 generates the ghost-side meta information on the basis of the information input by the information input unit 207 and the position and orientation information acquired from the position and orientation detection unit 104. The ghost-side meta information includes the information regarding field-of-view synchronization and asynchronization, the viewpoint position coordinates of the ghost-side user, and the like. The ghost-side meta information is transmitted to the body-side device 100 via the communication unit 201 and the network.

The meta information processing unit 209 determines output for the output unit 210 on the basis of the body-side meta information transmitted from the body-side device 100.

The output unit 210 is used for guiding the field of view of the ghost-side user to synchronize the field of view. Although described in detail later, the output unit 210 includes an actuator that guides the field of view of the ghost-side user by vibrations and the like.

[1-3-2. Processing to enable sharing of viewpoint position coordinates: field-of-view synchronization]

Next, the field-of-view synchronization, which is processing to enable the sharing of viewpoint position coordinates, will be described. The field-of-view synchronization means that the body-side user and the ghost-side user look at the same area (field of view) in the 360-degree image shared between the body-side device 100 and the ghost-side device 200. The ghost-side user can display and look at various areas in the 360-degree image by operating the ghost-side device 200 or changing the position and orientation of the ghost-side device 200. Therefore, the field of view (front-view image) of the body-side user and the field of view (display area for the ghost-side device 200) of the ghost-side user do not necessarily coincide with each other. Therefore, the ghost-side user does not necessarily look at the area that the body-side user wants the ghost-side user to look at. It is therefore possible to cause, by synchronizing the field of view of the body-side user and the field of view of the ghost-side user, the body-side user and the ghost-side user to look at the same area in the 360-degree image. It is possible to share, by synchronizing the field of view of the body-side user and the field of view of the ghost-side user, viewpoint position coordinates in the field of views.

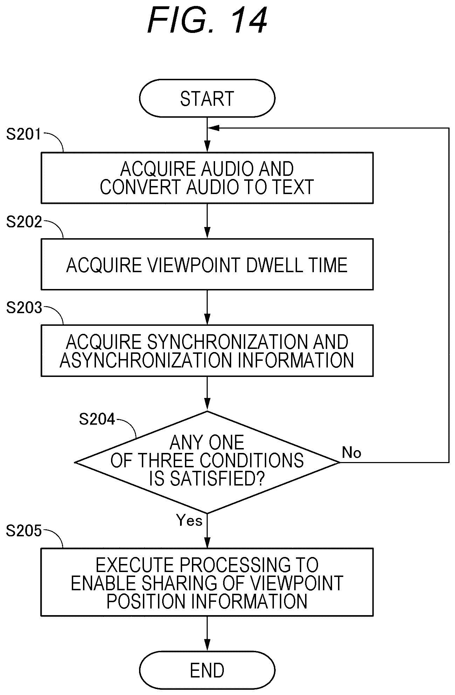

First, with reference to Fig. 14, a determination as to whether or not to execute the field-of-view synchronization in the sharing processing unit 114 of the body-side device 100 will be described.

First, in step S201, the audio input unit 110 acquires audio emitted by the body-side user, and converts the audio into text. The conversion of audio into text can be implemented through, for example, machine learning, deep learning, or the like. Note that audio emitted by the ghost-side user may also be acquired and converted into text. In this case, the ghost-side device 200 transmits audio data to the body-side device 100.

Furthermore, in step S202, viewpoint information of the body-side user is acquired through the viewpoint detection camera 101, an infrared sensor, or the like, and the viewpoint dwell time is estimated. The viewpoint dwell time can be estimated from the position of the viewpoint, the pupil movement, or the like. Note that viewpoint information of the ghost-side user may also be acquired. In this case, the ghost-side device 200 transmits the viewpoint information of the ghost-side user to the body-side device 100.

Moreover, in step S203, field-of-view synchronization and asynchronization information is acquired. In a case where the ghost-side user wants to synchronize the field of view, the ghost-side user turns a field-of-view synchronization switch through the input to the information input unit 207. The field-of-view synchronization switch corresponds to an instruction to execute processing related to the sharing of viewpoint position coordinates issued by the second user (ghost-side user) in the claims. When the field-of-view synchronization switch is turned on, processing to synchronize the field of view is executed. The input information processing unit 208 of the ghost-side device 200 generates, on the basis of the information input for the field-of-view synchronization switch, the synchronization and asynchronization information as the ghost-side meta information. Then, the ghost-side meta information is transmitted to the body-side device 100, and the sharing processing unit 114 acquires the ghost-side meta information.

Note that steps S201 to S203 are not necessarily executed in this order, and there is no limitation on the order as long as the information in each step can be acquired before step S204.

Next, in step S204, it is determined whether or not any one of the following three conditions is satisfied. A first condition of the three conditions is whether or not a specific demonstrative word is contained in utterance content converted into text. This is because, in a case where there is a specific demonstrative word in utterance content of the body-side user and the ghost-side user, it is considered that the body-side user and the ghost -side user attempts to look at a specific object or position in the 360-degree image, and the field of view should be synchronized.

The specific demonstrative word is prestored in a demonstrative word DB. Examples of the specific demonstrative word include "this", "there", "that", "over there", "right", "left", "up", "down", and the like. Note that the demonstrative word is not limited to the above, and the body-side user and the ghost-side user, the operator of the image sharing system 10, or the like may add any desired demonstrative word. The demonstrative word DB may be stored in a storage unit included in the body-side device 100, or may be held by the sharing processing unit 114 itself.

A second condition of the three conditions is whether or not the viewpoint dwell time is greater than or equal to a predetermined threshold. This is because, in a case where the viewpoint dwell time is greater than or equal to the predetermined threshold, it is considered that the body-side user is focusing attention on the position where the viewpoint dwells, and the body-side user wants the ghost-side user to look at the position where the viewpoint dwells.

A third condition of the three conditions is whether or not the field-of-view synchronization switch is on with reference to the field-of-view synchronization and asynchronization information. This is because, in a case where the synchronization switch is on, it is considered that the ghost-side user wants to synchronize the field of view.

In a case where any one of the three conditions is satisfied, the processing proceeds to step S205 (Yes in step S204).

Then, in step S205, processing to synchronize the field of view is executed as processing to enable the sharing of the viewpoint position coordinates of the body-side user with the ghost-side user.

Note that this determination need not necessarily be made on the basis of the three conditions, and may be made on the basis of any one or two conditions.

Note that, in a case where there is a plurality of ghost-side devices 200, that is, there is a plurality of ghost-side users, which ghost-side user to prioritize for field-of-view synchronization may be determined on the basis of an indicator called field-of-view priority. The field-of-view priority can be set on the basis of, for example, the viewpoint dwell time of each of the ghost-side users, an amount charged to each ghost-side user for a service using the image sharing system 10, density of the fields of view of the plurality of ghost-side users, intensity such as the number or volume of demonstrative words in utterance content of each ghost-side user, and the like.

The field-of-view synchronization can be implemented by a plurality of methods to guide the field of view.

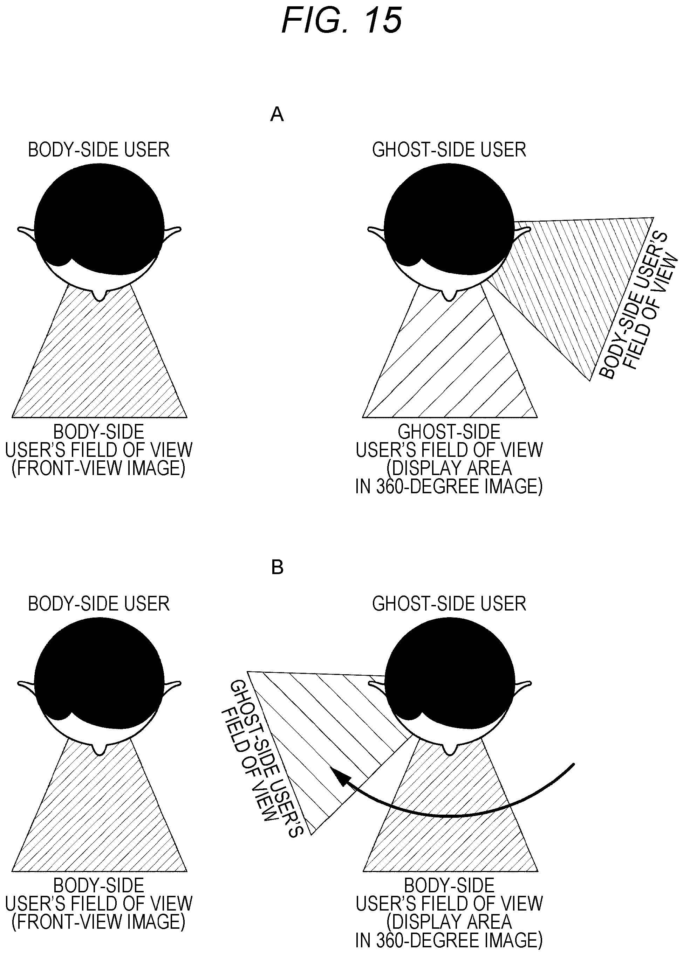

A first method for guiding the field of view will be described with reference to Fig. 15. The first method is a method for forcibly transitioning the image display on the ghost-side device 200.

The image processing unit 203 transitions, on the basis of the angle information indicating the position of the front-view image in the 360-degree image indicating the field of view of the body-side user as the body-side meta information, the display area in the 360-degree image displayed on the display unit 204 to make the display area coincide with the field of view of the body-side user.

For example, as illustrated in Fig. 15A, it is assumed that the field of view of the body-side user is in a specific direction, and the field of view of the ghost-side user is in a direction different from the field of view of the body-side user. In such a situation, in a case where the body-side user wants the ghost-side user to look at the same field of view as of the body-side user, the display area in the 360-degree image on the ghost-side device 200 is transitioned as illustrated in Fig. 15B. As a result, the front-view image corresponding to the field of view of the body-side user is displayed on the ghost-side device 200, that is, the field of view of the body-side user can be forcibly guided to make the field of view of the ghost-side user coincide with the field of view of the body-side user.

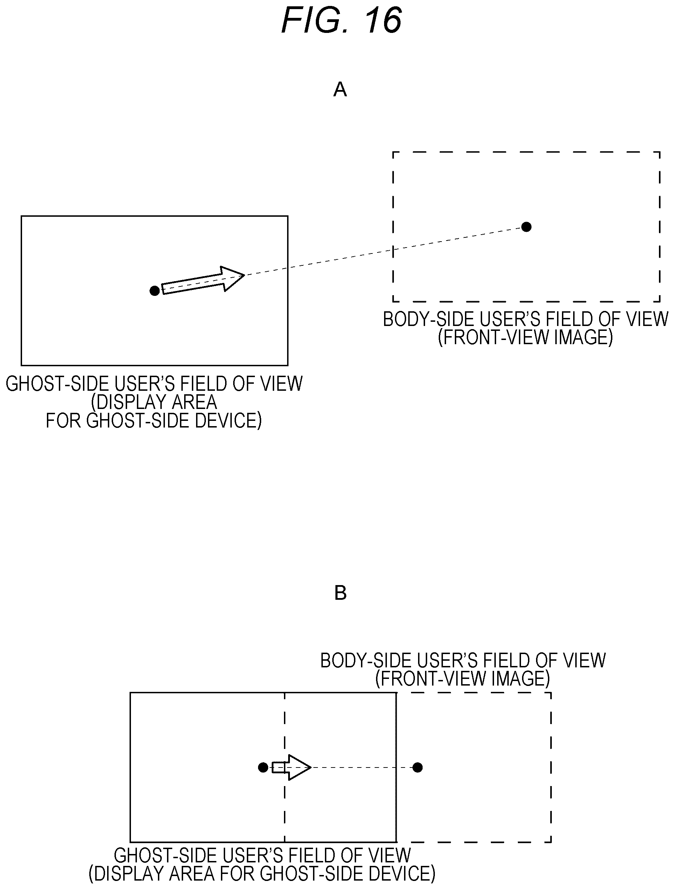

Next, a second method for guiding the field of view will be described with reference to Fig. 16. The second method is a method for displaying an icon for guiding the field of view of the ghost-side user on the display unit 204 of the ghost-side device 200. Examples of the icon include an arrow icon.

The image processing unit 203 renders an arrow icon indicating the direction of a straight line extending from the center coordinates of the field of view of the body-side user (the front-view image in the 360-degree image) to the center coordinates of the current field of view of the ghost-side user (the display area for the ghost-side device 200) onto the display area in the 360-degree image and outputs the resulting image to the display unit 204.

When the ghost-side user transitions the field of view in the direction indicated by the arrow icon displayed on the display unit 204, the field of view of the ghost-side user and the field of view of the body-side user can be made to coincide. In a case where the ghost-side device 200 is a portable device such as a smartphone, in order to transition the field of view, the ghost-side user is only required to move the ghost-side device 200 in the direction indicated by the arrow icon. Furthermore, in a case where the ghost-side device 200 is an HMD, in order to transition the field of view, the ghost-side user is only required to turn their face in the direction indicated by the arrow icon.

The direction indicated by the arrow icon is the direction of the straight line connecting the center coordinates of the field of view of the ghost-side user and the center coordinates of the field of view of the body-side user that is the shared side, so that it is possible to intuitively indicate to the ghost-side user in which direction to move the field of view.

Furthermore, the length of the arrow icon may be set to be proportional to the length of the straight line connecting the center coordinates of the field of view of the ghost-side user and the center coordinates of the field of view of the body-side user. It is therefore possible to intuitively indicate to the ghost-side user how much to move the field of view. In the example in Fig. 16A, the straight line connecting the center coordinates of the field of view of the ghost-side user and the center coordinates of the field of view of the body-side user is long, the arrow icon becomes long accordingly. Furthermore, in the example in Fig. 16B, the straight line connecting the center coordinates of the field of view of the ghost-side user and the center coordinates of the field of view of the body-side user is short, the arrow icon becomes short accordingly.

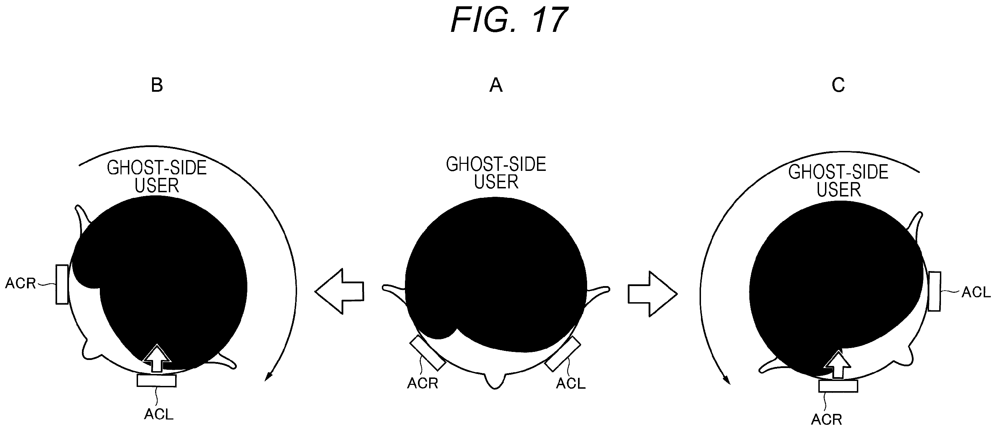

A third method for guiding the field of view will be described with reference to Fig. 17. The third method is a guiding method using a phenomenon called hanger reflex. The hanger reflex is a reflex movement where a sensation generated by applying pressure to a temple (temporal muscle) of the head with a hanger or the like is transmitted to the cerebral cortex, and the head rotates due to the relaxation of the sternocleidomastoid muscle on a side to which the pressure is applied.

In order to utilize the hanger reflex, it is necessary to bring an actuator for applying pressure to the temple (temporal muscle) into contact with the temple of the ghost-side user. Furthermore, the field of view (display area of the display unit 204) of the ghost-side user needs to change when the ghost-side user rotates their head, so that the ghost-side device 200 needs to be an HMD.

To make the ghost-side user turn to the right, it is necessary to apply pressure to the left temple, and to make the ghost-side user turn to the left, it is necessary to apply pressure to the right temple, so that it is necessary to provide actuators AC of the HMD at positions that are in contact with the left and right temples of the ghost-side user. The actuators AC correspond to the output unit 210.

The meta information processing unit 209 of the ghost-side device 200 generates a control signal for activating one of the left and right actuators AC on the basis of the angle information indicating the position of the front-view image in the 360-degree image as the body-side meta information transmitted from the body-side device 100, and outputs the control signal to the actuator AC.

For example, in a state where the actuators AC are in an inactive state illustrated in Fig. 17A, when the left actuator ACL is activated, the ghost-side user rotates their head to the right as illustrated in Fig. 17B, and the ghost-side user turns to the right accordingly. Furthermore, in the state where the actuators AC are in the inactive state illustrated in Fig. 17A, when the right actuator ACR is activated, the ghost-side user rotates their head to the left as illustrated in Fig. 17C, and the ghost-side user turns to the left accordingly. In response to the rotation of the head of the ghost-side user, the image displayed on the display unit 204 of the ghost-side device 200, which is an HMD, transitions in the direction of the head rotation. It is therefore possible to make the field of view of the ghost-side user and the field of view of the body-side user coincide.

Note that, instead of or in conjunction with the use of the hanger reflex, electrical stimulation of the semicircular canals may be used.

For example, displaying a borderline or the like indicating the field of view of the body-side user on the display unit 204 of the ghost-side device 200 allows the ghost-side user to check whether or not the field of view of the body-side user and the field of view of the ghost-side user coincide with reference to the borderline or the like. Furthermore, the image indicating the field of view of the body-side user is constantly displayed on the display unit 204 of the ghost-side device 200 using the picture-in-picture mechanism, and the ghost-side user can make the check with reference to the image.

Note that it is also possible to guide the field of view of the body-side user to coincide with the field of view of the ghost-side user by the guidance using the hanger reflex. In this case, it is necessary to provide actuators at positions that are in contact with the left and right temples of the body-side user. The meta information processing unit 115 of the body-side device 100 generates a control signal for activating one of the left and right actuators on the basis of the position and orientation information as the ghost-side meta information transmitted from the ghost-side device 200, and outputs the control signal to the actuator serving as the output unit 116. Then, when the actuator is activated, the head of the body-side user can be rotated to guide the field of view in a manner similar to that described with reference to Fig. 17. It is therefore possible to make the field of view of the body-side user coincide with the field of view of the ghost-side user, for example, and in a case where the ghost-side user wants to look at the left side, it is possible to guide the field of view of the body-side user to the left, for example.

[1-3-3. Processing to enable sharing of viewpoint position coordinates: display of viewpoint position coordinates]

Next, "display of viewpoint position coordinates" as processing to enable the sharing viewpoint position coordinates will be described. The display of viewpoint position coordinates means that the viewpoint position coordinates assigned to the 360-degree image through the processing in the information processing device 150 described above are displayed together with the 360-degree image on the display unit 204 of the ghost-side device 200 and presented to the ghost-side user. Displaying the viewpoint position coordinates on the ghost-side device 200 allows the ghost-side user to grasp where the body-side user is looking and where the body-side user is focusing attention.

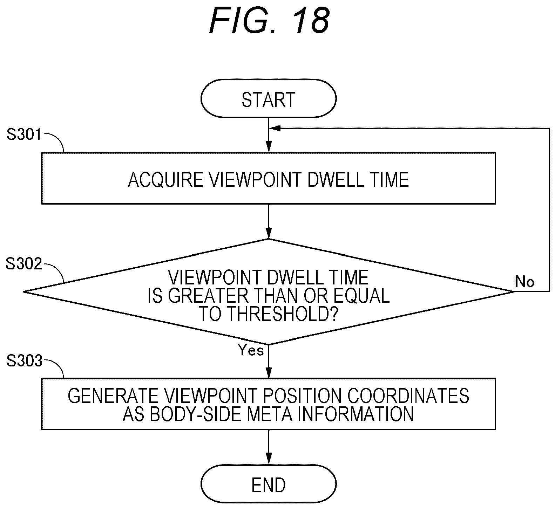

First, processing to generate the viewpoint position coordinates as the body-side meta information in the sharing processing unit 114 of the body-side device 100 will be described with reference to Fig. 18.

First, in step S301, the viewpoint information of the body-side user is acquired through the viewpoint detection camera 101, an infrared sensor, or the like, and the viewpoint dwell time is estimated. The viewpoint dwell time can be estimated from the viewpoint position, the viewpoint direction, the pupil movement and dilation, and the like.

Next, in step S302, it is determined whether or not the viewpoint dwell time is greater than or equal to the predetermined threshold. In a case where the viewpoint dwell time is greater than or equal to the predetermined threshold, the processing proceeds to step S303 (Yes in step S302).

Then, in step S303, the viewpoint position coordinates are generated as the body-side meta information. The viewpoint position coordinates are viewpoint position coordinates identified in the 360-degree image by the 360-degree image viewpoint position identification unit 107. The body-side meta information is transmitted to the ghost-side device 200 together with the 360-degree image via the communication unit 112 and the network.

Next, how the viewpoint position coordinates as the body-side meta information are displayed on the ghost-side device 200 will be described.

When the ghost-side device 200 receives the 360-degree image and the viewpoint position coordinates as the body-side meta information, the image processing unit 203 renders an icon indicating the viewpoint position coordinates onto the 360-degree image and outputs the resulting image to the display unit 204.

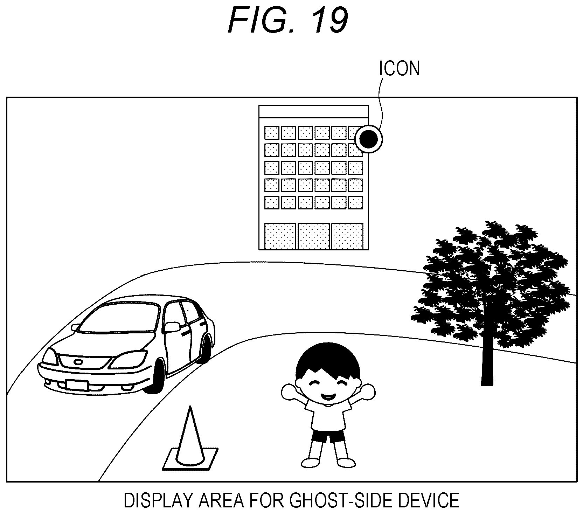

Then, as illustrated in Fig. 19, the display area and viewpoint position coordinates in the 360-degree image for the ghost-side device 200 are displayed on the display unit 204 and presented to the ghost-side user. In Fig. 19, the viewpoint position coordinates are rendered and displayed as a dot-shaped icon. It is therefore possible for the ghost-side user to grasp where the body-side user is looking and where the body-side user is focusing attention in the 360-degree image.

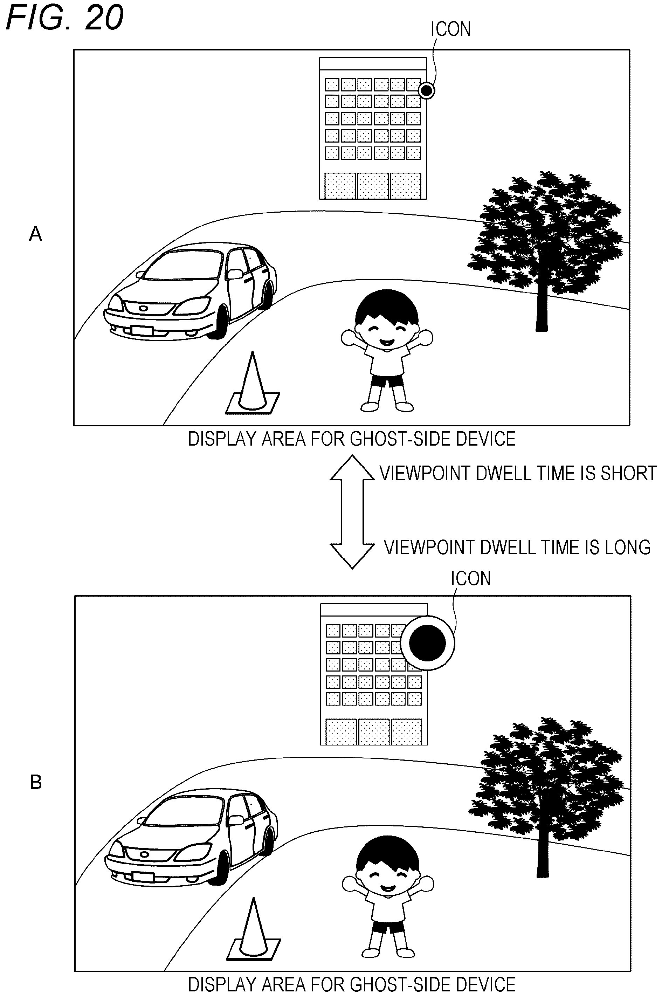

Note that the icon indicating the viewpoint position coordinates may be changed on the basis of the viewpoint dwell time of the body-side user. For example, as illustrated in Fig. 20A, in a case where the viewpoint dwell time is less than the predetermined threshold, the size of the icon is reduced in proportion to the viewpoint dwell time. Furthermore, as illustrated in Fig. 20B, in a case where the viewpoint dwell time is greater than the predetermined threshold, the size of the icon is increased in proportion to the viewpoint dwell time. It is therefore possible to visually notify the ghost-side user how much the body-side user is focusing attention on the viewpoint position. Furthermore, instead of or in addition to the size of the icon, the saturation, color, or the like of the icon may be changed on the basis of the viewpoint dwell time. The icon deformation processing is executed by the image processing unit 203 on the basis of the viewpoint dwell time as the body-side meta information.

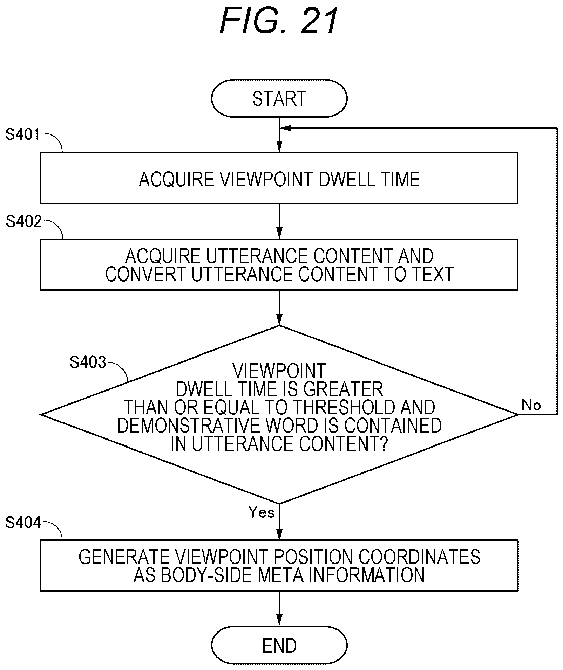

Next, processing to generate the viewpoint position coordinates as the body-side meta information on the basis of the viewpoint dwell time and the utterance content of the body-side user in the sharing processing unit 114 of the body-side device 100 will be described with reference to Fig. 21.

First, in step S401, the viewpoint information of the body-side user is acquired through the viewpoint detection camera 101, an infrared sensor, or the like, and the viewpoint dwell time is estimated. The viewpoint dwell time can be estimated from the viewpoint position, the viewpoint direction, the pupil movement and dilation, and the like.

Next, in step S402, the audio input unit 110 acquires audio emitted by the body-side user, and converts the audio into text. The conversion of audio into text can be implemented through, for example, machine learning, deep learning, or the like.

Next, in step S403, it is determined whether or not the viewpoint dwell time is greater than or equal to the predetermined threshold, and whether or not a specific demonstrative word is contained in the utterance content converted into text. Examples of the specific demonstrative word include "this", "there", "that", "over there", "right", "left", "up", "down", and the like, similar to those described above. The specific demonstrative word is prestored in the demonstrative word DB.

In a case where the viewpoint dwell time is greater than or equal to the predetermined threshold and the specific demonstrative word is contained in the utterance content, the processing proceeds to step S404 (Yes in step S403).

Then, in step S404, the viewpoint position coordinates are generated as the body-side meta information. The viewpoint position coordinates are viewpoint position coordinates identified in the 360-degree image by the 360-degree image viewpoint position identification unit 107. The body-side meta information is transmitted to the ghost-side device 200 together with the 360-degree image via the communication unit 112 and the network.

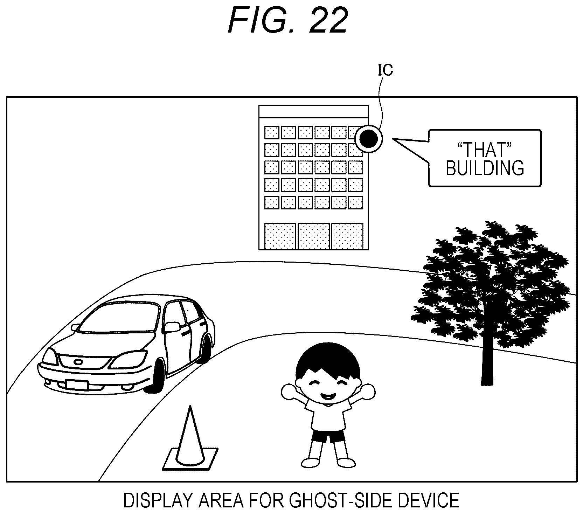

The display of the viewpoint position coordinates as the body-side meta information on the ghost-side device 200 is similar to that described with reference to Fig. 19. Note that, in a case where the body-side meta information is generated on the basis of the utterance content of the body-side user, the utterance content may be included in the body-side meta information and displayed together with the icon indicating the viewpoint position coordinates on the display unit of the ghost-side device 200 as illustrated in Fig. 22. It is therefore possible for the ghost-side user to grasp a thing or position indicated by the utterance content of the body-side user more accurately.

Conversely, it is also possible to present the viewpoint position coordinates of the ghost-side user to the body-side user. In this case, the ghost-side device 200 or the external device connected to the ghost-side device 200 needs to include the viewpoint detection camera 101, the viewpoint position detection unit 105, and the viewpoint position identification unit similar to those of the body-side device 100. Then, the viewpoint position coordinates are transmitted to the body-side device 100 as the ghost-side meta information.

The meta information processing unit 115 of the body-side device 100 renders an icon indicating the viewpoint position coordinates onto the front-view image corresponding to the field of view of the body-side user displayed on the output unit 116 on the basis of the viewpoint position coordinates as the ghost-side meta information.

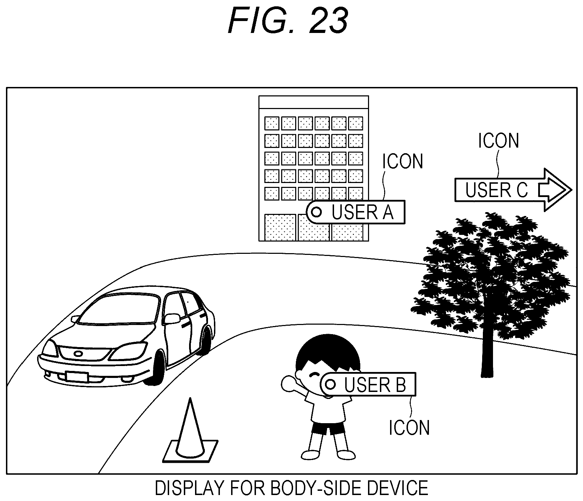

Note that, in a case where a plurality of ghost-side devices 200 is connected to one body-side device 100, viewpoint position coordinates of a plurality of ghost-side users may be displayed as icons on the output unit 116 of the body-side device 100 as illustrated in Fig. 23. At this time, the viewpoint position coordinates of the plurality of ghost-side users may be indicated by a plurality of icons having different colors or shapes, or user names may be displayed to make each ghost-side user distinguishable. Furthermore, in a case where the viewpoint position coordinates of the ghost-side user are outside the boundaries of the front-view image corresponding to the field of view of the body-side user, a direction in which the viewpoint position coordinates are present may be indicated by an arrow icon. It is therefore possible to distinguish between the viewpoint position coordinates inside the front-view image and the viewpoint position coordinates outside the front-view image.

The processing according to the first embodiment is executed as described above. According to the first embodiment, the viewpoint position coordinates of the body-side user can be assigned to the 360-degree image transmitted from the body-side device 100 to the ghost-side device 200. Furthermore, it is possible to inform, by transmitting the viewpoint position coordinates to the ghost-side device 200 together with the 360-degree image and displaying the viewpoint position coordinates on the ghost-side device 200, the ghost-side user of the direction the body-side user is facing and where the body-side user is looking. It is therefore possible for the ghost-side user to grasp a position, place, or the like the body-side user is focusing attention on, and to easily grasp the movement of the hands or body of the body-side user. The real-time sharing of the 360-degree image to which the viewpoint position coordinates are added as described above can facilitate the interaction between the body-side user and the ghost-side user.

Furthermore, it is possible for the body-side user and the ghost-side user to mutually grasp, by presenting their respective viewpoint position coordinates to each other, objects or areas they are focusing attention on, the movement of their respective viewpoints, and the like. It is therefore possible for the body-side user and the ghost-side user to constantly, immediately, and concretely issue a viewpoint-related action instruction as compared with a case where a hand gesture or voice command is used.

<2. Second embodiment>

[2-1. Assigning viewpoint position coordinates to 360-degree image]

[2-1-1. Configuration of body-side device 100]

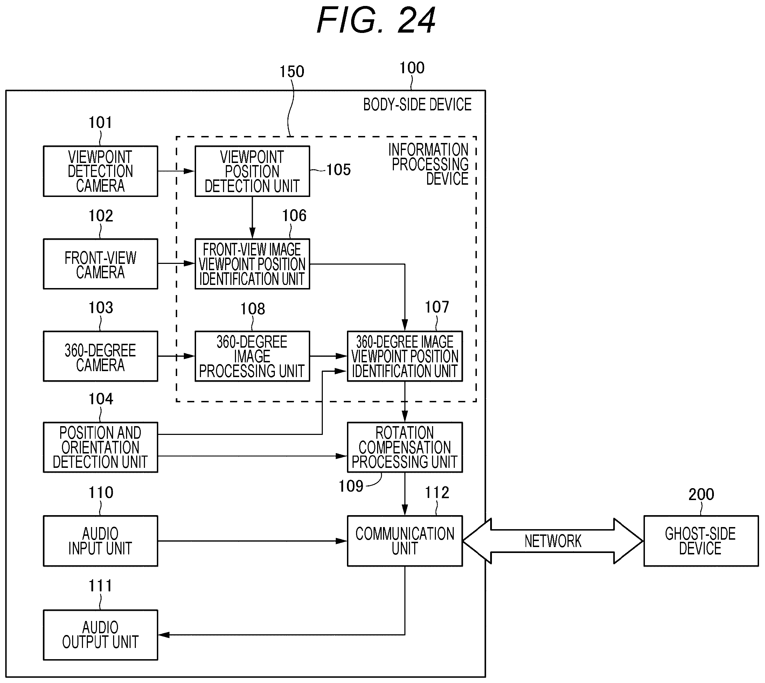

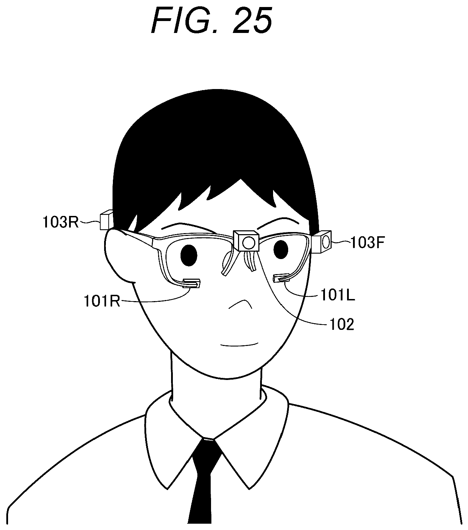

Next, a second embodiment of the present technology will be described. First, a configuration of a body-side device 100 will be described with reference to Figs. 24 and 25. Note that a configuration of an image sharing system 10 and a configuration of a ghost-side device 200 are similar to those in the first embodiment.

As illustrated in Fig. 24, the body-side device 100 includes a viewpoint detection camera 101, a front-view camera 102, a 360-degree camera 103, a position and orientation detection unit 104, a viewpoint position detection unit 105, a front-view image viewpoint position identification unit 106, a 360-degree image viewpoint position identification unit 107, a 360-degree image processing unit 108, a rotation compensation processing unit 109, an audio input unit 110, an audio output unit 111, and a communication unit 112.

Configurations, arrangements, and mounting methods of the viewpoint detection camera 101 and the front-view camera 102 are similar to those in the first embodiment.

The 360-degree camera 103 includes a wide-angle lens capable of capturing a 180-degree field of view, and includes a front camera 103F that captures an image diagonally in front of the body-side user and a rear camera 103R that captures an image diagonally behind the body-side user. A configuration where the front image and the rear image are acquired in one shot is similar to that in the first embodiment. As illustrated in Fig. 25, in the second embodiment, the front camera 103F is mounted diagonally in front of the face. Furthermore, the rear camera 103R is mounted diagonally behind the back of the head. As described above, in the second embodiment, the positions where the front camera 103F and the rear camera 103R are mounted are different from those in the first embodiment.

According to the second embodiment, the front image captured by the front camera 103F and the rear image captured by the rear camera 103R, the front camera 103F and the rear camera 103R constituting the 360-degree camera 103, are output to the 360-degree image processing unit 108 first, not to the 360-degree image viewpoint position identification unit 107.

The 360-degree image processing unit 108 combines the front image and the rear image to generate the 360-degree image. The 360-degree image processing unit 108 outputs the generated 360-degree image to the 360-degree image viewpoint position identification unit 107.

The 360-degree image viewpoint position identification unit 107 identifies the viewpoint position coordinates in the 360-degree image on the basis of the 360-degree image, the position and orientation information, and the first viewpoint position identification result. The 360-degree image viewpoint position identification unit 107 outputs the 360-degree image and the second viewpoint position identification result to the rotation compensation processing unit 109.

The second embodiment is different from the first embodiment in that the 360-degree image is generated by the 360-degree image processing unit 108 before the 360-degree image viewpoint position identification unit 107 identifies the viewpoint position coordinates, and the viewpoint position coordinates are identified in the generated 360-degree image rather than the front image.

The other configurations are similar to those in the first embodiment.

[2-1-2. Transformation of viewpoint position coordinates]

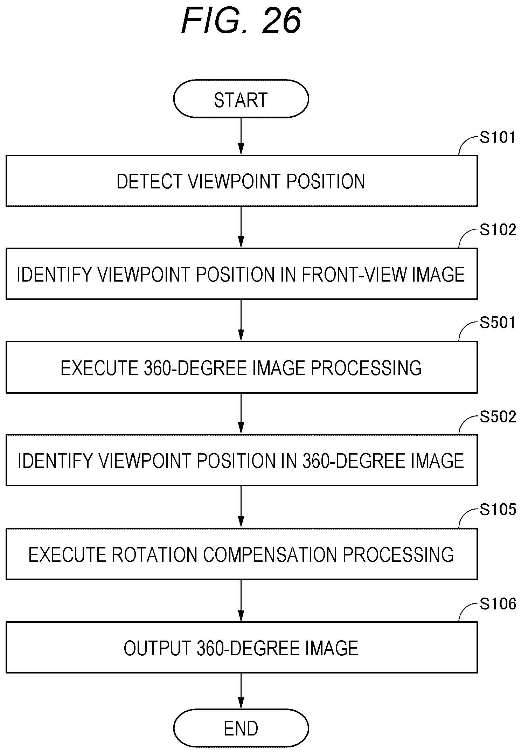

Next, processing that is executed by the information processing device 150 according to the second embodiment will be described with reference to Fig. 26. With the sharing of the 360-degree image enabled by the image sharing system 10, the information processing device 150 is required to generate the 360-degree image, transform the viewpoint position coordinates indicating the position where the body-side user is looking into coordinates in the 360-degree image, and identify which part of the 360-degree image the body-side user is looking at.

Note that, as a precondition for the processing in Fig. 26, it is assumed that the right-eye image and the left-eye image have been captured by the viewpoint detection camera 101, the front-view image has been captured by the front-view camera 102, and the front image and the rear image have been captured by the front camera 103F and the rear camera 103R constituting the 360-degree camera 103.

Furthermore, it is assumed that the position and orientation information has been detected by the position and orientation detection unit 104. The position and orientation estimation result is represented as $(\Delta\theta, \Delta\varphi, \Delta\psi)$ using the rotation angle of head movement of the body-side user.

Steps S101 and S102 are similar to those in the first embodiment. In a manner similar to the first embodiment, the viewpoint position coordinates (x', y') in the front-view image are represented by the above-described Equation 1.

Next, in step S501, the 360-degree image processing unit 108 combines the front image and the rear image, and further executes predetermined image processing to generate the 360-degree image.

Next, in step S502, the 360-degree image viewpoint position identification unit 107 identifies the viewpoint position coordinates in the 360-degree image on the basis of the viewpoint position coordinates in the front-view image. In a manner similar to the first embodiment, the viewpoint position coordinates (x, y) in the 360-degree image are represented by the above-described Equation 2.

Steps S105 and S106 are similar to those in the first embodiment.

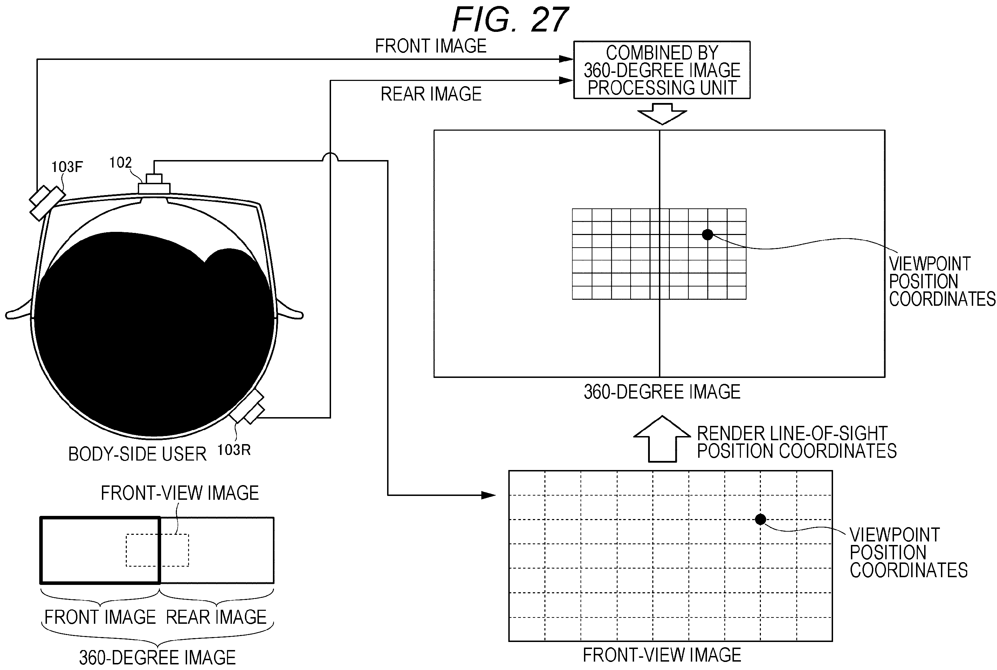

Next, coordinate transformation for assigning the viewpoint position coordinates in the front-view image to the 360-degree image that is executed by the 360-degree image viewpoint position identification unit 107 will be described with reference to Fig. 27.

As described above, in the second embodiment, the front camera 103F that is a part of the 360-degree camera 103 is mounted diagonally in front of the face of the body-side user, and the rear camera 103R is mounted diagonally behind the back of the head of the body-side user. Furthermore, the front-view camera 102 is securely mounted at the front center of the head of the body-side user.

Therefore, a relationship among the front image and the rear image constituting the 360-degree image, and the front-view image is as illustrated in Fig. 27. The front image and the rear image are arranged side by side to form the 360-degree image. The imaging area of the front-view camera 102 is set at the center of the 360-degree image, spanning the boundary between the front image and the rear image.

In the coordinate transformation for assigning the viewpoint position coordinates to the 360-degree image, first, a grid is set on the front-view image. Furthermore, a grid having the same number of intersections as the grid set on the front-view image is also set on the 360-degree image. As described above, in the second embodiment, since the imaging area of the front-view camera 102 is set at the center of the 360-degree image, spanning the boundary between the front image and the rear image, it is necessary to generate the 360-degree image and set the grid on the 360-degree image before the viewpoint coordinate transformation.

Then, the locations where the intersections of the grid on the front-view image correspond to on the 360-degree image are identified through the coordinate transformation based on the LUT generated in advance through calibration, and the viewpoint position coordinates identified in the front-view camera 102 are rendered onto the 360-degree image. In the second embodiment, this coordinate transformation is executed after the 360-degree image is generated by combining the front image and the rear image.

For the transmission of the 360-degree image to the ghost-side device 200, it is desirable that the frame rate be at least 30 fps, so that it is assumed that the number of data entries of the LUT is increased in advance through linear or nonlinear interpolation in order to reduce the computational load during the viewpoint coordinate transformation.

The calibration method is similar to that in the first embodiment. Note that there may be another method for identifying the viewpoint position in the 360-degree image on the basis of features in the vicinity of the viewpoint position in the front-view image other than the coordinate transformation based on the LUT.

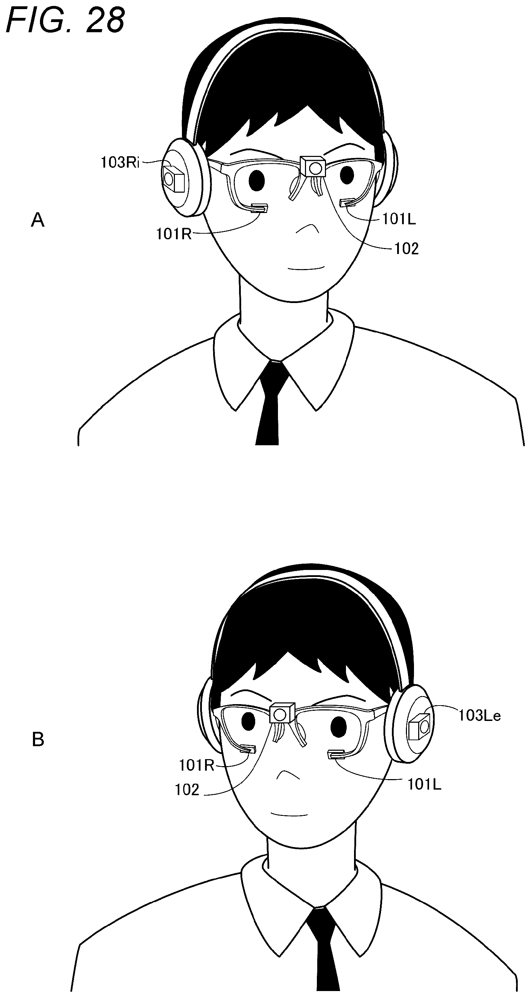

Note that, as illustrated in Fig. 28, even in a case where the 360-degree camera 103 includes a left camera 103Le that captures an image of the left side of the body-side user and a right camera 103Ri that captures an image of the right side, the viewpoint position coordinates can be assigned to the 360-degree image in a manner similar to the second embodiment.

The processing according to the second embodiment is executed as described above. According to the second embodiment, even when the arrangement of the 360-degree camera 103 is different from that in the first embodiment, the viewpoint position coordinates of the body-side user can be assigned to the 360-degree image shared between the body-side device 100 and the ghost-side device 200. Furthermore, the viewpoint position coordinates can also be assigned to the 360-degree image obtained by combining the front image and the rear image. Note that the processing to enable the sharing of the viewpoint position coordinates between the body-side device 100 and the ghost-side device 200 is similar to that in the first embodiment.

<3. Third embodiment>

[3-1. Assigning viewpoint position coordinates to 360-degree image]

[3-1-1. Configuration of body-side device 100]

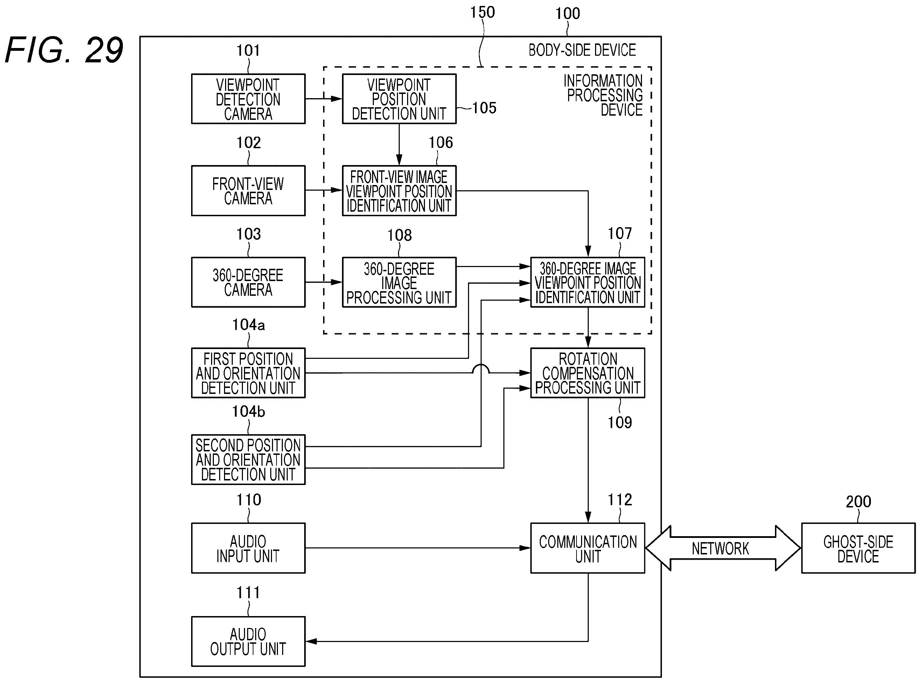

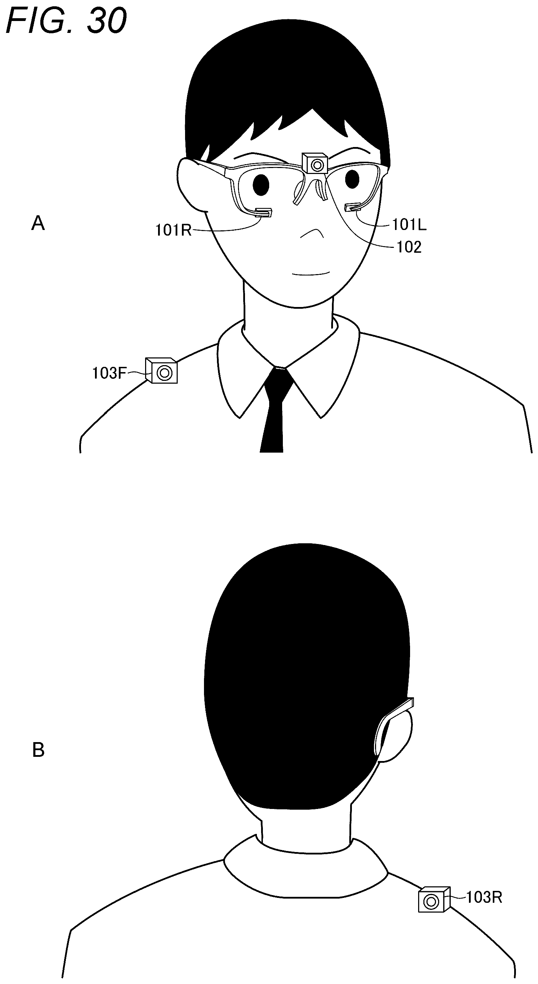

Next, a third embodiment of the present technology will be described. First, a configuration of a body-side device 100 will be described with reference to Figs. 29 and 30. Note that a configuration of an image sharing system 10 and a configuration of a ghost-side device 200 are similar to those in the first embodiment.

As illustrated in Fig. 29, the body-side device 100 includes a viewpoint detection camera 101, a front-view camera 102, a 360-degree camera 103, a first position and orientation detection unit 104a, a second position and orientation detection unit 104b, a viewpoint position detection unit 105, a front-view image viewpoint position identification unit 106, a 360-degree image viewpoint position identification unit 107, a 360-degree image processing unit 108, a rotation compensation processing unit 109, an audio input unit 110, an audio output unit 111, and a communication unit 112.

Configurations, arrangements, and mounting methods of the viewpoint detection camera 101 and the front-view camera 102 are similar to those in the first embodiment.

The 360-degree camera 103 includes a wide-angle lens capable of capturing a 180-degree field of view, and includes a front camera 103F that captures an image in front of the body-side user and a rear camera 103R that captures an image behind the body-side user. A configuration where the front image and the rear image are acquired in one shot is similar to that in the first embodiment. As illustrated in Fig. 30, in the third embodiment, the front camera 103F and the rear camera 103R are mounted on a shoulder of the body-side user. As described above, in the third embodiment, the positions where the front camera 103F and the rear camera 103R are mounted are different from those in the first embodiment.

In the third embodiment, since the 360-degree camera 103 is mounted on the shoulder (body) instead of the face or head of the body-side user, the position and orientation of the 360-degree camera 103 change in response to the movement of the body of the body-side user. On the other hand, the position and orientation of the front-view camera 102 change in response to the movement of the face of the body-side user. Therefore, the front-view camera 102 and the 360-degree camera 103 operate independently, and the positional relationship is not fixed and constantly changes in a manner that depends on the position and orientation of the face of the body-side user.

In the third embodiment, the front image captured by the front camera 103F and the rear image captured by the rear camera 103R, the front camera 103F and the rear camera 103R constituting the 360-degree camera 103, are output to the 360-degree image processing unit 108 first, not to the 360-degree image viewpoint position identification unit 107.

The 360-degree image processing unit 108 combines the front image and the rear image to generate the 360-degree image. The 360-degree image processing unit 108 outputs the generated 360-degree image to the 360-degree image viewpoint position identification unit 107. The third embodiment is different from the first embodiment in that the 360-degree image is generated by the 360-degree image processing unit 108 before the 360-degree image viewpoint position identification unit 107 identifies the viewpoint position coordinates, and the viewpoint position coordinates are identified in the 360-degree image rather than the front image.

The first position and orientation detection unit 104a detects the position and orientation of the front-view camera 102 mounted on the face of the body-side user. The second position and orientation detection unit 104b detects the position and orientation of the 360-degree camera 103 mounted on the shoulder (body) of the body-side user. Sensors used as the first position and orientation detection unit 104a and the second position and orientation detection unit 104b are similar to those described in the first embodiment. The first position and orientation detection unit 104a outputs first position and orientation information to the 360-degree image viewpoint position identification unit 107 and the rotation compensation processing unit 109. Furthermore, the second position and orientation detection unit 104b outputs second position and orientation information to the 360-degree image viewpoint position identification unit 107 and the rotation compensation processing unit 109.

As described above, in the third embodiment, the body-side device 100 includes the first position and orientation detection unit 104a and the second position and orientation detection unit 104b. This is because the front-view camera 102 is mounted on the head of the body-side user, the 360-degree camera 103 is mounted on the body, the positional relationship between the front-view camera 102 and the 360-degree camera 103 is not fixed, and it is therefore necessary to individually detect the positions and orientations of the front-view camera 102 and the 360-degree camera 103.

The 360-degree image viewpoint position identification unit 107 identifies the viewpoint position coordinates in the 360-degree image on the basis of the 360-degree image, the first position and orientation information, the second position and orientation information, and the first viewpoint position identification result. The 360-degree image viewpoint position identification unit 107 outputs the 360-degree image and the second viewpoint position identification result to the rotation compensation processing unit 109.

The other configurations are similar to those in the first embodiment.

[3-1-2. Transformation of viewpoint position coordinates]

Next, processing that is executed by the information processing device 150 will be described. With the sharing of the 360-degree image enabled by the image sharing system 10, the information processing device 150 is required to generate the 360-degree image, transform viewpoint position coordinates indicating the position where the body-side user is looking into coordinates in the 360-degree image, and identify which part of the 360-degree image the body-side user is looking at.

A flowchart illustrating the processing for transformation of viewpoint position coordinates that is executed by the information processing device 150 is similar to that in the second embodiment illustrated in Fig. 26.

Note that, as a precondition for the processing in Fig. 26, it is assumed that the right-eye image and the left-eye image have been captured by the viewpoint detection camera 101, the front-view image has been captured by the front-view camera 102, and the front image and the rear image have been captured by the front camera 103F and the rear camera 103R constituting the 360-degree camera 103.

Furthermore, it is assumed that the position and orientation information has been detected by the position and orientation detection unit 104. The position and orientation estimation result is represented as $(\Delta\theta, \Delta\varphi, \Delta\psi)$ using the rotation angle of head movement of the body-side user.

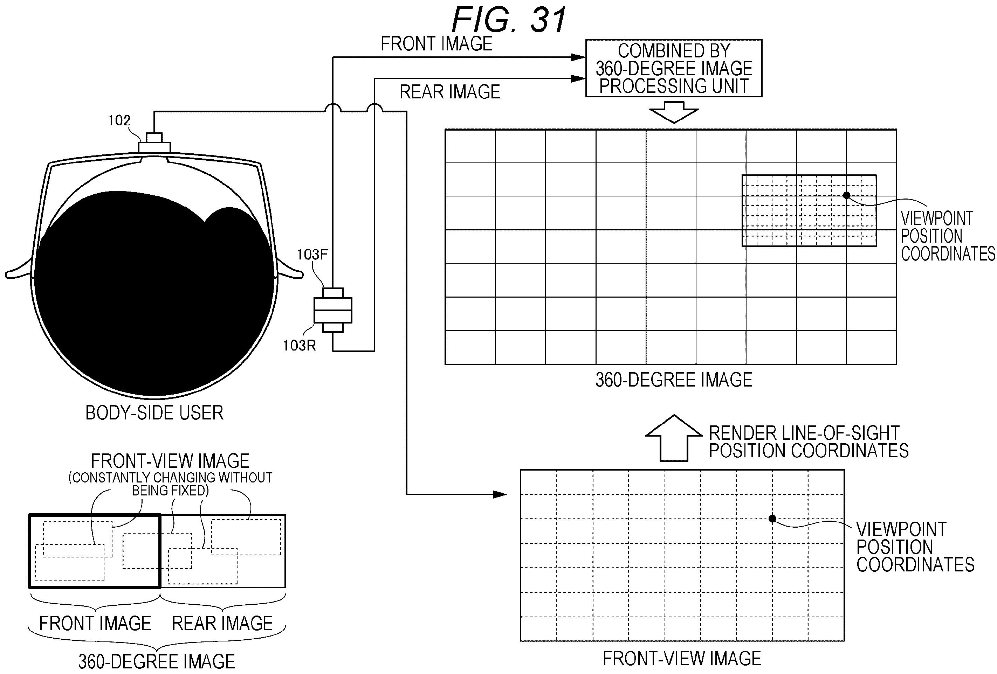

Next, coordinate transformation for assigning the viewpoint position coordinates in the front-view image to the 360-degree image that is executed by the 360-degree image viewpoint position identification unit 107 will be described with reference to Fig. 31.

As described above, in the third embodiment, the front-view camera 102 is securely mounted at the front center of the head of the body-side user. Furthermore, the front camera 103F that is a part of the 360-degree camera 103 is mounted on the shoulder of the body-side user, facing forward, and the rear camera 103R is mounted on the shoulder of the body-side user, facing rearward.

Therefore, a relationship among the front-view image, the rear image, and the front image, the rear image and the front image constituting the 360-degree image, is as illustrated in Fig. 31. The 360-degree image includes the front image and the rear image arranged side by side. Furthermore, as described above, since the positional relationship between the front-view camera 102 and the 360-degree camera 103 changes in a manner that depends on the position and orientation of the face and body of the body-side user, the imaging area of the front-view camera 102 is not fixed at a specific position in the 360-degree image but constantly changes.

In the coordinate transformation for assigning the viewpoint position coordinates to the 360-degree image, first, a grid is set on the front-view image, as illustrated in Fig. 31. Furthermore, a grid is set on the 360-degree image. Note that, in the third embodiment, the positional relationship between the front-view image and the 360-degree image constantly changes. Therefore, a relative positional relationship between the front-view camera 102 and the 360-degree camera 103 is identified on the basis of the first position and orientation information and the second position and orientation information, and where the front-view image is located in the 360-degree image is identified on the basis of the positional relationship. Then, a grid having the same number of intersections as the grid set on the front-view image is also set in the position of the front-view image on the 360-degree image. It is therefore possible to transform the viewpoint position coordinates using the grid set on the 360-degree image and the grid set on the front-view camera 102 image.

Therefore, the locations where the intersections of the grid on the front-view image correspond to on the 360-degree image are identified through the coordinate transformation based on the LUT generated in advance through calibration, and the viewpoint position coordinates identified in the front-view camera 102 are rendered onto the 360-degree image. In the third embodiment, this coordinate transformation is executed after the 360-degree image is generated by combining the front image and the rear image.

Note that the front-view image needs to be distorted in a manner that depends on the position of the front-view image in the 360-degree image. The curvature can be calculated on the basis of the optical specifications of the 360-degree camera 103.

For the transmission of the 360-degree image to the ghost-side device 200, it is desirable that the frame rate be at least 30 fps, so that it is assumed that the number of data entries of the LUT is increased in advance through linear or nonlinear interpolation in order to reduce the computational load during the viewpoint coordinate transformation.

The calibration method is similar to that in the first embodiment. Note that there may be another method for identifying the viewpoint position in the 360-degree image on the basis of features in the vicinity of the viewpoint position in the front-view image other than the coordinate transformation based on the LUT.

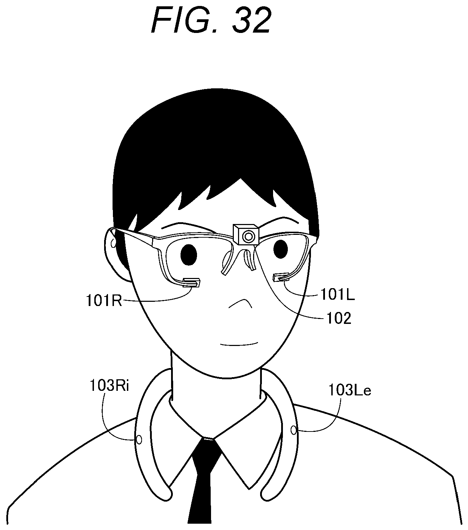

Note that, as illustrated in Fig. 32, even in a case where the 360-degree camera 103 includes a left camera 103Le that captures an image of the left side of the body-side user and a right camera 103Ri that captures an image of the right side and is mounted on the body of the body-side user, the viewpoint position coordinates can be assigned to the 360-degree image in a manner similar to the third embodiment.

Even in a case where the 360-degree camera 103 is not arranged at the first-person viewpoint position of the body-side user as in the third embodiment, the viewpoint position coordinates can be assigned to the 360-degree image.

The processing according to the third embodiment is executed as described above. According to the third embodiment, even in a case where the arrangement of the 360-degree camera 103 is different from that in the first embodiment, and the positional relationship between the front-view camera 102 and the 360-degree camera 103 changes in a manner that depends on the position and orientation of the face of the body-side user, the viewpoint position coordinates of the body-side user can be assigned to the 360-degree image.

<4. Modifications>

Although the embodiments of the present technology have been specifically described above, the present technology is not limited to the above-described embodiments, and various modifications based on the technical idea of the present technology are possible.

The image types supported by the image sharing system 10 are not particularly limited, and examples of the image types may include a still image, a moving image, and frame images constituting the same image.

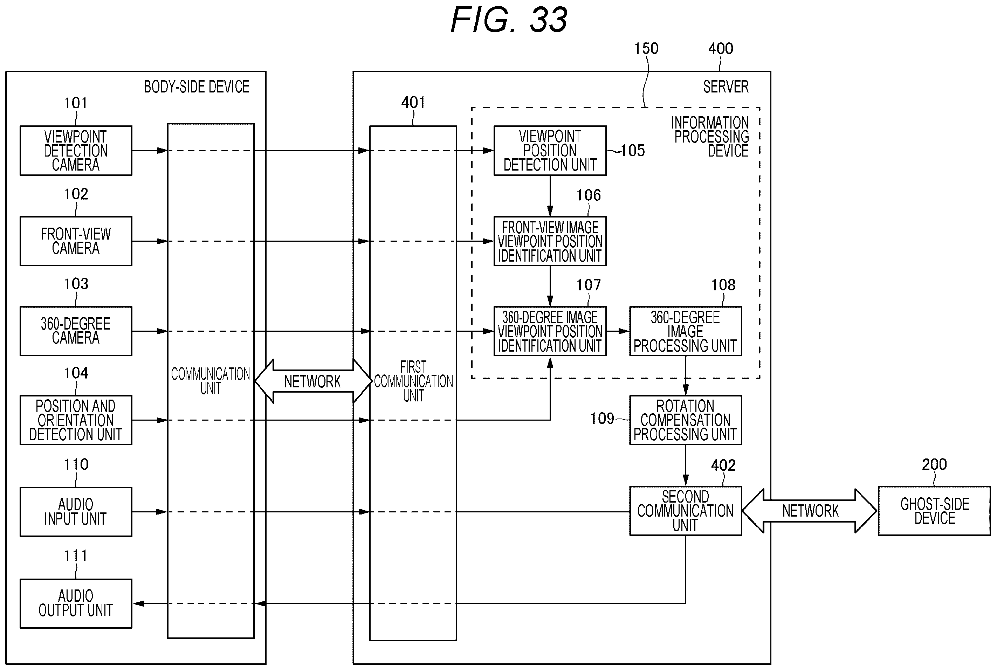

In the first to third embodiments, the processing is executed by the body-side device 100 and the ghost-side device 200, but the processing executed by the information processing device 150 may be executed by a server 400 as illustrated in Fig. 33.

The server 400 includes at least a first communication unit 401, a second communication unit 402, and a control unit and a storage unit (not illustrated). The server 400 is, for example, a cloud server.

It is therefore possible to execute the processing on the server 400 with higher throughput even in a case where the body-side device 100 has low computing power. Furthermore, it is possible to reduce the processing load on the body-side device 100, reduce power consumption, and the like. Furthermore, through the processing executed by the server 400 with high computing power, it is possible to transmit a 360-degree image with a high frame rate to the ghost-side device 200. Furthermore, the body-side device 100 can be downsized and reduced in cost.

Note that a part of the processing executed by the information processing device 150 may be executed by the body-side device 100, and the remaining part may be executed by the server 400.

In the first to third embodiments, the body-side device 100 includes the front-view camera 102, but, even in a case where the body-side device 100 does not include the front-view camera 102, the viewpoint position coordinates can be assigned to the 360-degree image. Since there is no front-view image without the front-view camera 102, the viewpoint position coordinates of the left-eye image and the right-eye image cannot be identified as the viewpoint position coordinates in the front-view image. Therefore, rendering is executed as follows.

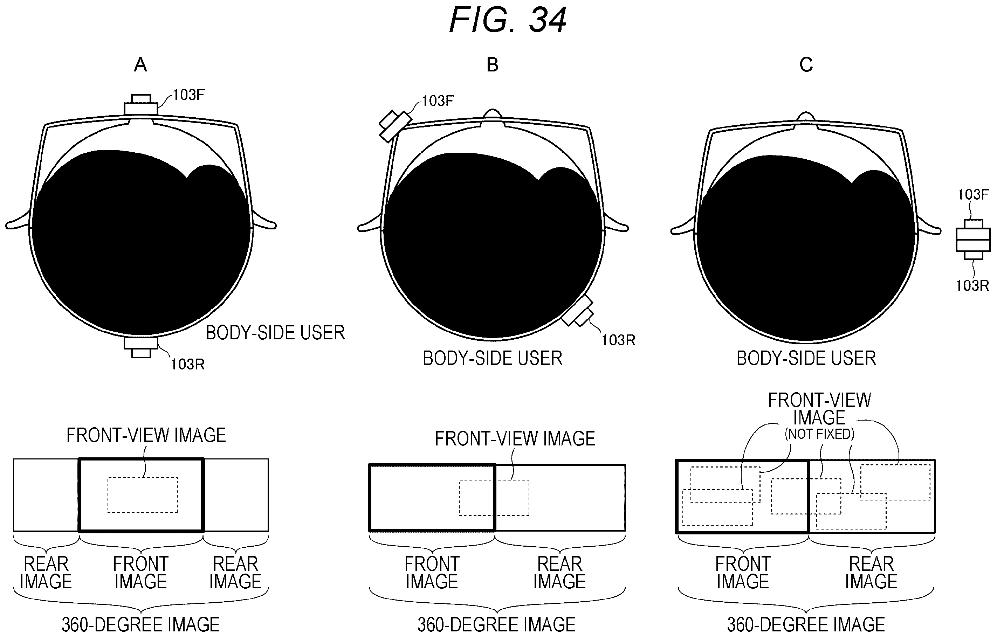

A first example illustrated in Fig. 34A is a case where there is no front-view camera 102 under the same conditions as in the first embodiment described above. In this case, a predetermined area in the front image is virtually defined as the imaging area of the front-view camera 102, and a conversion file between the viewpoint detection camera 101 and the front camera 103F that is a part of the 360-degree camera 103 is generated, thereby enabling the rendering of the viewpoint position coordinates onto the 360-degree image.

A second example illustrated in Fig. 34B is a case where there is no front-view camera 102 under the same conditions as in the second embodiment described above. In this case, a predetermined area in the 360-degree image is virtually defined as the imaging area of the front-view camera 102, and a conversion file between the viewpoint detection camera 101 and the front camera 103F that is a part of the 360-degree camera 103 is generated, thereby enabling the rendering of the viewpoint position coordinates onto the 360-degree image.

A third example illustrated in Fig. 34C is a case where there is no front-view camera 102 under the same conditions as in the third embodiment described above. In this case, calibration is executed on the basis of the positional relationship between the viewpoint detection camera 101 and the 360-degree camera 103 as in Fig. 34 A or 34B, and then the transformation of viewpoint position coordinates is executed in a manner similar to the third embodiment, thereby enabling the rendering of the viewpoint position coordinates onto the 360-degree image.

As described above, in a case where there is no front-view camera 102 and it is the front-view image, the viewpoint position coordinates in the 360-degree image are represented by the following Equation 3.

[Math. 3]

$$(x, y) = f(xg1, yg1, xg2, yg2, \Delta\theta, \Delta\varphi, \Delta\psi)$$

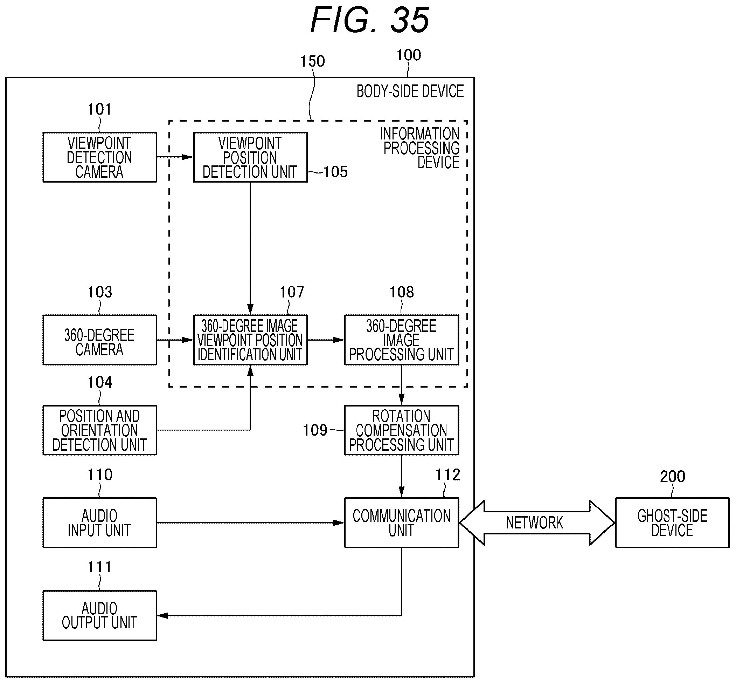

The configuration of body-side device 100 without the front-view camera 102 is as illustrated in Fig. 35. Fig. 31 illustrates a configuration in a case where there is no front-view camera 102 in the body-side device 100 according to the first embodiment. Since there is no front-view camera 102, the front-view image viewpoint position identification unit 106 is rendered unnecessary.

The present technology may also have the following configurations.

(1) An information processing device including:

a 360-degree image processing unit that generates a 360-degree image on the basis of a plurality of captured images captured by a plurality of cameras worn by a first user; and
a 360-degree image viewpoint position identification unit that identifies viewpoint position coordinates of the first user in the 360-degree image.

(2) The information processing device according to (1), further including a front-view image viewpoint position identification unit that identifies, on the basis of a front-view image captured by a front-view camera that captures an image in front of the first user and viewpoint position coordinates of the user, viewpoint position coordinates of the first user in the front-view image.

(3) The information processing device according to (2), further including a viewpoint position detection unit that detects viewpoint position coordinates of the first user from an eye image obtained by capturing an image of an eye of the first user.

(4) The information processing device according to (3), in which the front-view image viewpoint position identification unit transforms the viewpoint position coordinates in the eye image into coordinates in the front-view image.

(5) The information processing device according to (4), in which the 360-degree image viewpoint position identification unit transforms the viewpoint position coordinates in the front-view image into coordinates in the 360-degree image.

(6) The information processing device according to any one of (1) to (5), in which the 360-degree image viewpoint position identification unit transforms the viewpoint position coordinates in an eye image obtained by capturing an image of an eye of the first user into coordinates in the 360-degree image.

(7) The information processing device according to any one of (1) to (6), in which the 360-degree image viewpoint position identification unit identifies viewpoint position coordinates of the first user in the captured images constituting the 360-degree image.

(8) The information processing device according to any one of (1) to (7), in which the 360-degree image viewpoint position identification unit identifies the viewpoint position coordinates of the first user in the 360-degree image generated by the 360-degree image processing unit.

(9) The information processing device according to any one of (1) to (8), in which the 360-degree image is transmitted to a display device of a second user different from the first user.

(10) The information processing device according to any one of (1) to (9), further including a sharing processing unit that determines whether or not to execute processing related to sharing of the viewpoint position coordinates between the first user and a second user.

(11) The information processing device according to (10), in which, in a case where a viewpoint dwell time of the first user is greater than or equal to a predetermined threshold, the sharing processing unit determines to execute the processing related to sharing of the viewpoint position coordinates.

(12) The information processing device according to (10) or (11), in which, in a case where a predetermined demonstrative word is contained in utterance content of the first user, the sharing processing unit determines to execute the processing related to sharing of the viewpoint position coordinates.

(13) The information processing device according to any one of (10) to (12), in which, in a case where the second user issues an instruction to execute the processing related to sharing of the viewpoint position coordinates, the sharing processing unit determines to execute the processing related to sharing of the viewpoint position coordinates.

(14) The information processing device according to (8), in which the viewpoint position coordinates are displayed on a display device of the second user through processing related to sharing of the viewpoint position coordinates.

(15) The information processing device according to (8), in which, to synchronize a field of view of the first user and a field of view of the second user, the field of view of the second user is guided through processing related to sharing of the viewpoint position coordinates.

(16) The information processing device according to (15), in which the field of view is guided by applying pressure to a temple of the second user.

(17) The information processing device according to (15) or (16), in which the field of view is guided by transitioning a display on a display device of the second user.

(18) The information processing device according to any one of (15) to (17), in which the field of view is guided by displaying an icon indicating a direction toward a display on a display device of the second user.

(19) A display device configured to

display a 360-degree image generated on the basis of a plurality of captured images captured by a plurality of cameras worn by a first user and viewpoint position coordinates of the first user identified in the 360-degree image and present the 360-degree image and the viewpoint position coordinates to a second user different from the first user.

(20) An image sharing system including:

an information processing device including:

a 360-degree image processing unit that generates a 360-degree image on the basis of a plurality of captured images captured by a plurality of cameras worn by a first user; and

a 360-degree image viewpoint position identification unit that identifies viewpoint position coordinates of the first user in the 360-degree image; and

a display device that displays the 360-degree image and the viewpoint position coordinates of the first user identified in the 360-degree image and present the 360-degree image and the viewpoint position coordinates to a second user different from the first user.

REFERENCE SIGNS LIST

10 Image sharing system
102 Front-view camera
105 Viewpoint position detection unit
106 Front-view image viewpoint position identification unit
107 360-degree image viewpoint position identification unit
108 360-degree image processing unit
114 Sharing processing unit
150 Information processing device
200 Ghost-side device (display device)

## Claims

1. An information processing device comprising:

   a 360-degree image processing unit that generates a 360-degree image on a basis of a plurality of captured images captured by a plurality of cameras worn by a first user; and
   a 360-degree image viewpoint position identification unit that identifies viewpoint position coordinates of the first user in the 360-degree image.

2. The information processing device according to claim 1, further comprising:
   a front-view image viewpoint position identification unit that identifies, on a basis of a front-view image captured by a front-view camera that captures an image in front of the first user and viewpoint position coordinates of the user, viewpoint position coordinates of the first user in the front-view image.

3. The information processing device according to claim 2, further comprising:
   a viewpoint position detection unit that detects viewpoint position coordinates of the first user from an eye image obtained by capturing an image of an eye of the first user.

4. The information processing device according to claim 3,

wherein the front-view image viewpoint position identification unit transforms the viewpoint position coordinates in the eye image into coordinates in the front-view image.

5. The information processing device according to claim 4,
   wherein the 360-degree image viewpoint position identification unit transforms the viewpoint position coordinates in the front-view image into coordinates in the 360-degree image.

6. The information processing device according to claim 1,
   wherein the 360-degree image viewpoint position identification unit transforms the viewpoint position coordinates in an eye image obtained by capturing an image of an eye of the first user into coordinates in the 360-degree image.

7. The information processing device according to claim 1,
   wherein the 360-degree image viewpoint position identification unit identifies viewpoint position coordinates of the first user in the captured images constituting the 360-degree image.

8. The information processing device according to claim 1,
   wherein the 360-degree image viewpoint position identification unit identifies the viewpoint position coordinates of the first user in the 360-degree image generated by the 360-degree image processing unit.

9. The information processing device according to claim 1,
   wherein the 360-degree image is transmitted to a display device of a second user different from the first user.

10. The information processing device according to claim 1, further comprising:
    a sharing processing unit that determines whether or not to execute processing related to sharing of the viewpoint position coordinates between the first user and a second user.

11. The information processing device according to claim 10,
    wherein in a case where a viewpoint dwell time of the first user is greater than or equal to a predetermined threshold, the sharing processing unit determines to execute the processing related to sharing of the viewpoint position coordinates.

12. The information processing device according to claim 10,
    wherein in a case where a predetermined demonstrative word is contained in utterance content of the first user, the sharing processing unit determines to execute the processing related to sharing of the viewpoint position coordinates.

13. The information processing device according to claim 10,
    wherein in a case where the second user issues an instruction to execute the processing related to sharing of the viewpoint position coordinates, the sharing processing unit determines to execute the processing related to sharing of the viewpoint position coordinates.

14. The information processing device according to claim 8,
    wherein the viewpoint position coordinates are displayed on a display device of the second user through processing related to sharing of the viewpoint position coordinates.

15. The information processing device according to claim 8,
    wherein to synchronize a field of view of the first user and a field of view of the second user, the field of view of the second user is guided through processing related to sharing of the viewpoint position coordinates.

16. The information processing device according to claim 15,
    wherein the field of view is guided by applying pressure to a temple of the second user.

17. The information processing device according to claim 15,
    wherein the field of view is guided by transitioning a display on a display device of the second user.

18. The information processing device according to claim 15,
    wherein the field of view is guided by displaying an icon indicating a direction toward a display on a display device of the second user.

**19.** A display device configured to
display a 360-degree image generated on a basis of a plurality of captured images captured by a plurality of cameras worn by a first user and viewpoint position coordinates of the first user identified in the 360-degree image, and present the 360-degree image and the viewpoint position coordinates to a second user different from the first user.

**20.** An image sharing system comprising:
an information processing device including:

a 360-degree image processing unit that generates a 360-degree image on a basis of a plurality of captured images captured by a plurality of cameras worn by a first user; and
a 360-degree image viewpoint position identification unit that identifies viewpoint position coordinates of the first user in the 360-degree image; and
a display device that displays the 360-degree image and the viewpoint position coordinates of the first user identified in the 360-degree image and present the 360-degree image and the viewpoint position coordinates to a second user different from the first user.

# FIG. 1

GHOST-SIDE DEVICE 200

GHOST-SIDE USER

360-DEGREE IMAGE

AUDIO

BODY-SIDE DEVICE 100

360-DEGREE IMAGE

AUDIO

GHOST-SIDE DEVICE 200

GHOST-SIDE USER

BODY-SIDE USER

360-DEGREE IMAGE

AUDIO

GHOST-SIDE DEVICE 200

GHOST-SIDE USER

10

EP 4 589 410 A1

## FIG. 2

## FIG. 3

A

103F

101R

101L

102

B

103R

## FIG. 4

EP 4 589 410 A1

# FIG. 5

START

DETECT VIEWPOINT POSITION COORDINATES — S101

IDENTIFY VIEWPOINT POSITION IN FRONT-VIEW IMAGE — S102

IDENTIFY VIEWPOINT POSITION IN FRONT IMAGE — S103

EXECUTE 360-DEGREE IMAGE PROCESSING — S104

EXECUTE ROTATION COMPENSATION PROCESSING — S105

OUTPUT 360-DEGREE IMAGE — S106

END

# FIG. 6

## A

RIGHT-EYE IMAGE

LEFT-EYE IMAGE

$y_{g1}$

$x_{g1}$

$y_{g2}$

$x_{g2}$

## B

FRONT-VIEW IMAGE

$(x', y')$

## C

FRONT IMAGE (360-DEGREE IMAGE)

$(x, y)$

# FIG. 7

103R  103F  102

BODY-SIDE USER

VIEWPOINT POSITION COORDINATES

FRONT IMAGE

RENDER LINE-OF-SIGHT POSITION COORDINATES

FRONT-VIEW IMAGE

REAR IMAGE  FRONT IMAGE  REAR IMAGE

360-DEGREE IMAGE

VIEWPOINT POSITION COORDINATES

FRONT-VIEW IMAGE

EP 4 589 410 A1

## FIG. 8

360-DEGREE IMAGE

FRONT-VIEW IMAGE

DISPLAY

310

INPUT TO SPECIFY
POSITION THAT COINCIDES
WITH GRID INTERSECTION
IN FRONT-VIEW IMAGE

CALIBRATION
UI

100

BODY-SIDE
DEVICE

FRONT-VIEW
IMAGE

360-DEGREE
IMAGE

EXTERNAL
DEVICE
(SUCH AS PC)

300

EP 4 589 410 A1

# FIG. 9

*FIG. 10*

INPUT TO SPECIFY POSITION AT WHICH BODY-SIDE USER IS LOOKING

360-DEGREE IMAGE

FRONT-VIEW IMAGE

(2)
(1)

(2)
(1)

DISPLAY

310

INPUT TO SPECIFY POSITION AT WHICH BODY-SIDE USER IS LOOKING

CALIBRATION UI

100

BODY-SIDE DEVICE

FRONT-VIEW IMAGE

360-DEGREE IMAGE

EXTERNAL DEVICE (SUCH AS PC)

300

EP 4 589 410 A1

# FIG. 11

A

DISTANCE BETWEEN
VIEWPOINT POSITIONS
IS GREATER THAN OR
EQUAL TO THRESHOLD

B

DISTANCE BETWEEN
VIEWPOINT POSITIONS
IS LESS THAN OR
EQUAL TO THRESHOLD

FIG. 12

EP 4 589 410 A1

## FIG. 13

# FIG. 14

START

S201 — ACQUIRE AUDIO AND CONVERT AUDIO TO TEXT

S202 — ACQUIRE VIEWPOINT DWELL TIME

S203 — ACQUIRE SYNCHRONIZATION AND ASYNCHRONIZATION INFORMATION

S204 — ANY ONE OF THREE CONDITIONS IS SATISFIED? — No

Yes

S205 — EXECUTE PROCESSING TO ENABLE SHARING OF VIEWPOINT POSITION INFORMATION

END

# FIG. 15

A

BODY-SIDE USER

GHOST-SIDE USER

BODY-SIDE
USER'S FIELD OF VIEW
(FRONT-VIEW IMAGE)

GHOST-SIDE
USER'S FIELD OF VIEW
(DISPLAY AREA
IN 360-DEGREE IMAGE)

BODY-SIDE USER'S
FIELD OF VIEW

B

BODY-SIDE USER

GHOST-SIDE USER

BODY-SIDE
USER'S FIELD OF VIEW
(FRONT-VIEW IMAGE)

BODY-SIDE
USER'S FIELD OF VIEW
(DISPLAY AREA
IN 360-DEGREE IMAGE)

GHOST-SIDE USER'S
FIELD OF VIEW

# FIG. 16

A

BODY-SIDE USER'S FIELD OF VIEW
(FRONT-VIEW IMAGE)

GHOST-SIDE USER'S FIELD OF VIEW
(DISPLAY AREA
FOR GHOST-SIDE DEVICE)

B

BODY-SIDE USER'S FIELD OF VIEW
(FRONT-VIEW IMAGE)

GHOST-SIDE USER'S FIELD OF VIEW
(DISPLAY AREA FOR GHOST-SIDE DEVICE)

## FIG. 17

B

A

C

GHOST-SIDE
USER

GHOST-SIDE
USER

GHOST-SIDE
USER

ACR

ACL

ACR          ACL

ACL

ACR

EP 4 589 410 A1

## FIG. 18

```
              ( START )
                  │
 S301            ▼
 ┌───────────────────────────────────────────┐
 │       ACQUIRE VIEWPOINT DWELL TIME         │
 └───────────────────────────────────────────┘
                  │
 S302             ▼
         ╱────────────────────────╲         No
 ◄──────<   VIEWPOINT DWELL TIME    >────────
         ╲ IS GREATER THAN OR EQUAL╱
           ╲    TO THRESHOLD?    ╱
             ╲────────────────╱
                  │ Yes
 S303             ▼
 ┌───────────────────────────────────────────┐
 │  GENERATE VIEWPOINT POSITION COORDINATES   │
 │     AS BODY-SIDE META INFORMATION          │
 └───────────────────────────────────────────┘
                  │
                  ▼
               ( END )
```

# FIG. 19

ICON

DISPLAY AREA FOR GHOST-SIDE DEVICE

EP 4 589 410 A1

# FIG. 20

ICON

A

DISPLAY AREA FOR GHOST-SIDE DEVICE

VIEWPOINT DWELL TIME IS SHORT

VIEWPOINT DWELL TIME IS LONG

ICON

B

DISPLAY AREA FOR GHOST-SIDE DEVICE

43

# FIG. 21

START

S401 — ACQUIRE VIEWPOINT DWELL TIME

S402 — ACQUIRE UTTERANCE CONTENT AND CONVERT UTTERANCE CONTENT TO TEXT

S403 — VIEWPOINT DWELL TIME IS GREATER THAN OR EQUAL TO THRESHOLD AND DEMONSTRATIVE WORD IS CONTAINED IN UTTERANCE CONTENT?

No

Yes

S404 — GENERATE VIEWPOINT POSITION COORDINATES AS BODY-SIDE META INFORMATION

END

# FIG. 22

DISPLAY AREA FOR GHOST-SIDE DEVICE

# FIG. 23

DISPLAY FOR BODY-SIDE DEVICE

# FIG. 24

BODY-SIDE DEVICE 100

150

INFORMATION PROCESSING DEVICE

101 VIEWPOINT DETECTION CAMERA
102 FRONT-VIEW CAMERA
103 360-DEGREE CAMERA
104 POSITION AND ORIENTATION DETECTION UNIT
110 AUDIO INPUT UNIT
111 AUDIO OUTPUT UNIT

105 VIEWPOINT POSITION DETECTION UNIT
106 FRONT-VIEW IMAGE VIEWPOINT POSITION IDENTIFICATION UNIT
108 360-DEGREE IMAGE PROCESSING UNIT
107 360-DEGREE IMAGE VIEWPOINT POSITION IDENTIFICATION UNIT
109 ROTATION COMPENSATION PROCESSING UNIT
112 COMMUNICATION UNIT

NETWORK

200 GHOST-SIDE DEVICE

# FIG. 25

# FIG. 26

START

DETECT VIEWPOINT POSITION ⌐S101

IDENTIFY VIEWPOINT POSITION IN FRONT-VIEW IMAGE ⌐S102

EXECUTE 360-DEGREE IMAGE PROCESSING ⌐S501

IDENTIFY VIEWPOINT POSITION IN 360-DEGREE IMAGE ⌐S502

EXECUTE ROTATION COMPENSATION PROCESSING ⌐S105

OUTPUT 360-DEGREE IMAGE ⌐S106

END

# FIG. 27

FRONT IMAGE

COMBINED BY
360-DEGREE IMAGE
PROCESSING UNIT

REAR IMAGE

103F   102

VIEWPOINT
POSITION
COORDINATES

360-DEGREE IMAGE

BODY-SIDE USER   103R

RENDER LINE-OF-SIGHT
POSITION COORDINATES

FRONT-VIEW IMAGE

VIEWPOINT
POSITION
COORDINATES

FRONT IMAGE   REAR IMAGE

360-DEGREE IMAGE

FRONT-VIEW IMAGE

EP 4 589 410 A1

*FIG. 28*

A

103Ri

101R

101L

102

B

103Le

101R

102

101L

FIG. 29

EP 4 589 410 A1

FIG. 30

A

101R

101L
102

103F

B

103R

## FIG. 31

FRONT IMAGE

REAR IMAGE

COMBINED BY
360-DEGREE IMAGE
PROCESSING UNIT

102

103F

103R

BODY-SIDE USER

VIEWPOINT
POSITION
COORDINATES

360-DEGREE IMAGE

FRONT-VIEW IMAGE
(CONSTANTLY CHANGING WITHOUT
BEING FIXED)

FRONT IMAGE    REAR IMAGE

360-DEGREE IMAGE

RENDER LINE-OF-SIGHT
POSITION COORDINATES

VIEWPOINT
POSITION
COORDINATES

FRONT-VIEW IMAGE

EP 4 589 410 A1

# FIG. 32

FIG. 33

# FIG. 34

| A | B | C |
| --- | --- | --- |
| 103F | 103F | 103F |
| BODY-SIDE USER | BODY-SIDE USER | BODY-SIDE USER |
| 103R | 103R | 103R |

**A**

FRONT-VIEW IMAGE

REAR IMAGE · FRONT IMAGE · REAR IMAGE

360-DEGREE IMAGE

**B**

FRONT-VIEW IMAGE

FRONT IMAGE · REAR IMAGE

360-DEGREE IMAGE

**C**

FRONT-VIEW IMAGE (NOT FIXED)

FRONT IMAGE · REAR IMAGE

360-DEGREE IMAGE

EP 4 589 410 A1

# FIG. 35

EP 4 589 410 A1

## INTERNATIONAL SEARCH REPORT

| International application No. |
| --- |
| **PCT/JP2023/028962** |

**A. CLASSIFICATION OF SUBJECT MATTER**

*G06F 3/01*(2006.01)i; *G06F 3/0346*(2013.01)i; *G06F 3/0484*(2022.01)i; *G06F 3/16*(2006.01)i; *H04N 21/24*(2011.01)i
FI:  G06F3/01 510; G06F3/0346 423; G06F3/0484; G06F3/16 650; H04N21/24

According to International Patent Classification (IPC) or to both national classification and IPC

**B. FIELDS SEARCHED**

Minimum documentation searched (classification system followed by classification symbols)

G06F3/01; G06F3/0346; G06F3/0484; G06F3/16; H04N21/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2020/0128232 A1 (PCMS HOLDINGS, INC.) 23 April 2020 (2020-04-23) paragraphs [0130]-[0150], fig. 3-6 | 1, 6-8 |
| Y | WO 2017/056631 A1 (SONY CORP.) 06 April 2017 (2017-04-06) paragraphs [0026]-[0042] | 1, 6-20 |
| Y | JP 2018-182570 A (KONICA MINOLTA, INC.) 15 November 2018 (2018-11-15) paragraphs [0082]-[0084], fig. 13-14 | 1, 6-20 |
| A | WO 2017/191700 A1 (SONY INTERACTIVE ENTERTAINMENT INC.) 09 November 2017 (2017-11-09) entire text | 1-20 |
| A | JP 2019-164216 A (TOSHIBA CORP.) 26 September 2019 (2019-09-26) entire text | 1-20 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 October 2023** | **17 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/028962**

| Patent document cited in search report | | | Publication date (day/month/year) | Patent family member(s) | | | Publication date (day/month/year) |
|---|---|---|---|---|---|---|---|
| US | 2020/0128232 | A1 | 23 April 2020 | WO | 2019/005622 | A | |
| | | | | CN | 110998566 | A | |
| WO | 2017/056631 | A1 | 06 April 2017 | US | 2018/0349083 | A1 | |
| | | | | paragraphs [0049]-[0065] | | | |
| | | | | CN | 108028906 | A | |
| | | | | KR | 10-2018-0064370 | A | |
| JP | 2018-182570 | A | 15 November 2018 | (Family: none) | | | |
| WO | 2017/191700 | A1 | 09 November 2017 | US | 2019/0114823 | A1 | |
| | | | | entire text | | | |
| JP | 2019-164216 | A | 26 September 2019 | (Family: none) | | | |

Form PCT/ISA/210 (patent family annex) (January 2015)

## REFERENCES CITED IN THE DESCRIPTION

**Patent documents cited in the description**

- JP 2021170341 A